# EUROPEAN PATENT APPLICATION

(11) **EP 2 863 356 A1**
(43) Date of publication of application: **22.04.2015**
(21) Application number: 14189808.0
(22) Date of filing: 21.10.2014
(51) Int. Cl.: G06Q 30/02

(54) **Enhanced data collection and analysis**

(30) Priority: 21.10.2013 US 201361893410 P; 30.09.2014 US 201414502534
(71) Applicant: Sybase, Inc., Dublin, CA 94568 (US)
(72) Inventor: Garcia, Steven Charles, 69190 Walldorf (DE); Brooks, James Thomas, 69190 Walldorf (DE)
(74) Representative: Cole, Douglas Lloyd

(57) **Abstract**

A method and corresponding apparatus that is configured to receive data from a mobile operator, process the data by, at least, anonymizing and aggregating the data to identify at least one market opportunity within a predefined market footprint, and generate a report that highlights the at least one market opportunity.

## Description

### RELATED APPLICATIONS

This application claims priority to U.S. Patent Application Serial No. 61/893,410 filed on October 21, 2013, the content of which is incorporated herein in its entirety.

### TECHNICAL FIELD

The present disclosure relates to data collection and analysis, and in particular, to the collection and analysis of data from mobile operators, such as, among others, cellular/wireless telephone and data service providers.

### BACKGROUND

There are more mobile devices in the world than there are people. The proliferation of mobile devices has changed significantly the way people communicate, live, and engage with each other at work and in their personal lives. For example, the proliferation of smart devices has significantly changed the behavior of mobile enabled consumers in connection with how they interact with, e.g., companies and brands. As more consumers get connected around the world through mobile devices, smartphones, and the Internet, all of these interactions create massive amounts of data. The sheer volume and scale of this data has made analysis difficult.

### BRIEF DESCRIPTION OF THE DRAWINGS

FIG. 1 illustrates aspects of an exemplary environment in which embodiments of enhanced data collection and analysis described herein may be implemented.
FIG. 2 illustrates various exchanges and interactions that might take place in connection with a registration process associated with embodiments of enhanced data collection and analysis described herein.
FIG. 3 depicts various service provider network elements in an Operating Environment (OE) that are leveraged in connection with performing enhanced data collection and analysis consistent with the embodiments described herein.
FIG. 4 extends a hypothetical OE depicted in FIG. 3 to highlight possible Mediation Zones (MZs) within which aspects of a Processing Environment (PE) may reside.
FIGs. 5A-5G illustrate example user interface screens consistent with embodiments described herein.
FIG. 6 illustrates an architectural overview of one possible implementation of the data collection and analysis described herein, including functionality exposed to a Data Consumer.
FIGs. 7A and 7B illustrate still other ways of understanding the overall architecture of the enhanced data collection and analysis techniques described herein.
FIG. 8 illustrates an example data model that may be used in connection with the enhanced data collection and analysis techniques described herein.
FIG. 9 illustrates an example computer and telecommunications hardware and software infrastructure capable of implementing the enhanced data collection and analysis techniques described herein.

### DESCRIPTION OF EXAMPLE EMBODIMENTS

### Overview

An enhanced data collection and analysis apparatus and corresponding methodologies described herein (referred to also as "SAP Consumer Insight 365" or simply "Consumer Insight 365") leverages mobile operator's empirical data sources to identify grouped consumer demographic trends and patterns providing actionable market intelligence. SAP Consumer Insight 365 sources this data from major mobile operators worldwide to provide customers with rich, reliable consumer behavior and insight analytics and analyses services. Results are delivered through a smart searchable portal with quick intuitive service packages utilizing simple subscription models.

SAP Consumer Insight 365 may be implemented as a cloud based service powered by SAP HANA® or any other underlying database infrastructure that enables the types of storage and analysis described herein. Mobile network operator data may be stored discreetly and individually partitioned within secure cloud data centers and SAP Consumer Insight 365 onsite appliances. A user friendly customer access portal makes cleansed clustered aggregated data sets available to end users.

SAP Consumer Insight 365 provides near real time understanding and awareness within mobile data usage, trends, and patterns. This provides carriers, retailers, researchers, and Ad/Marketing companies, among others, with a comprehensive market ("Big Picture") view of growing market opportunities within desired market footprints. The types of information and analysis that may be provided include:
Marketing and behavioral based demographic movement and mobile activities by macro/micro location and near real-time targeted advertising polling analysis;
Business Intelligence - the analysis of communication patterns (such as calls, short message service (SMS) and other messaging, data (e.g., click stream), etc.) to identify specific opportunity decision maker groups and locations;
Patterns over time may provide predictable trends and the ability to rank by the frequency of interaction with consumer's browsing, apps, tethering, locations trends and others;
Consumer's preferences and trends by locations, browsing and social patterns;
New user understanding by location, preferences, interests, activities implemented through user models;
Consumer event predictions such as "user about to leave" and impending purchase behavior change scenarios; and/or
Mobile marketing and ad campaign effectiveness and return on investment (ROI) performance.

SAP Consumer Insight 365 mobile service thus allows enterprises to gain insight from the analysis of massive amounts of aggregated and anonymized consumer data residing in operator networks in real time. This market intelligence can enable brands to strengthen relationships with consumers through more targeted and context-specific marketing efforts.

The narrative that was presented above is illustrative only and it will be readily apparent to one of ordinary skill in the relevant art that numerous variations, alternatives, etc. are easily possible.

### Example Embodiment

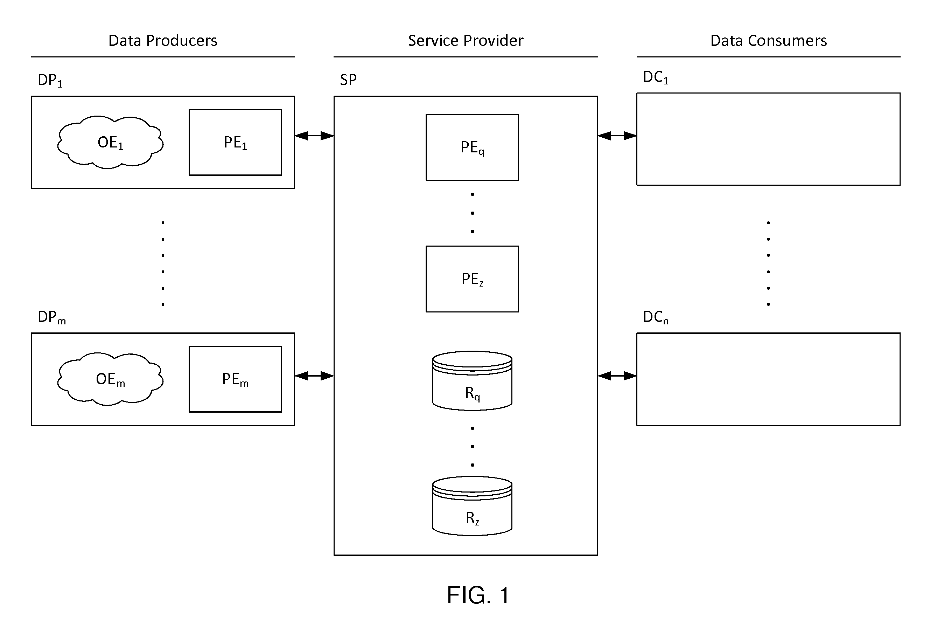

FIG. 1 depicts an exemplary environment in which aspects of SAP Consumer Insight 365 may operate. The environment that is illustrated in FIG. 1 comprises:
Data Producers (DPs) such as DP₁ → DPₘ
A Service Provider (SP); and
Data Consumers (DCs) such as such as DC₁ → DCₙ.

It is important to note that the particulars of FIG. 1 (such as for example the specific components that are presented, the component arrangement that is depicted, etc.) are illustrative only and it will be readily apparent to one of ordinary skill in the relevant art that numerous alternatives (including inter alia other or different components, alternative arrangements, etc.) are easily possible.

### Data Producers

A Data Producer (DP) is an entity that, for example during the normal course of its operations, generates data.

A DP may be, for example, any combination of one or more of inter alia a telecommunications provider such as a landline operator or carrier or a wireless operator or carrier, an Internet Service Provider (ISP), a credit card clearinghouse or other financial institution, a social media operation, a retail operation, etc.

Among other things a DP may comprise an Operating Environment (OE, such as OE₁ and OEₘ in FIG. 1) which possibly inter alia supports a DP's normal operations.

As just one example, for the case where a DP is a wireless operator or carrier:

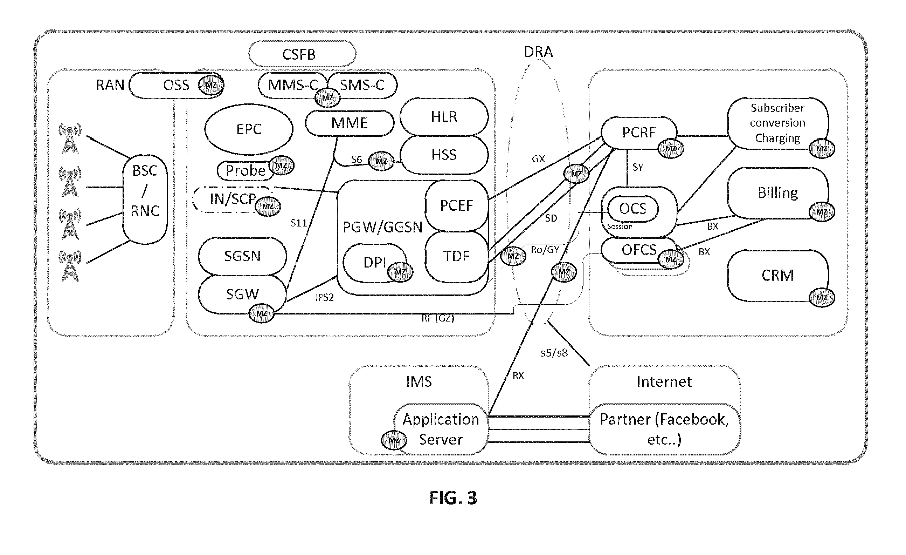

1) FIG. 3 depicts various of the network elements - Base Station Controller (BSC), Circuit-Switch Fallback (CSFB), Evolved Packet Core (EPC), Gateway GPRS Support Node (GGSN), Home Location Register (HLR), Home Subscriber Server (HSS), IP Multimedia Subsystem (IMS), Intelligent Network/Service Control Point (IN/SCP), Multimedia Exchange (MME), Multimedia Messaging Service (MMS), Online Charging System (OCS), Offline Charging System (OFCS), Policy and Charging Enforcement Function (PCEF), Policy and Charging Rules Function (PCRF), PDN Gateway (P-GW), Radio Access Network (RAN), Radio Network Controller (RNC), Serving GPRS Support Node (SGSN), Serving Gateway (S-GW), Short Message Service (SMS), and Traffic Detection Function (TDF) - that one would typically find within the OE of a wireless operator or carrier.
2) Such a DP's data may comprise possibly any combination of one or more of inter alia device registration information, subscriber information, signaling information, roaming information, voice call management information, (Short Message Service (SMS), Multimedia Message Service (MMS), etc.) messaging information, billing information, information associated with an application resident on a subscriber's device, Internet access and utilization information, Wireless Application Protocol (WAP) information, etc.

A DP may comprise aspects of a Processing Environment (PE, such as PE₁ and PEₘ in FIG. 1) including inter alia various processing elements (such as for example computer platforms, appliances, application software, connectivity, etc.) and/or one or more repositories (such as for example databases, files, stores, etc.).

Among other things a PE may pull, extract, receive, etc. data from different components, elements, systems, etc. of a DP's OE, along with possibly data from other sources internal to a DP and/or external to a DP, and then inter alia process that data.

A PE may support inter alia:
1) A management or administration facility through which inter alia operations may be controlled, scheduled, monitored, etc.
2) Various data extraction, collection, preprocessing, processing, error reporting and correction, etc. operations including possibly inter alia:
   a) Anonymization to for example and inter alia provide privacy protections by among other things replacing identification values (such as for example telephone number, etc.) with opaque (e.g., possibly system-generated) values;
   b) Aggregation to for example and inter alia provide further privacy protections (by for example selectively combining or clustering individual, user, subscriber, etc. data);
   c) Formatting to for example and inter alia (i) account for the disparate formats, structures, etc. of source systems, components, etc. and (ii) account for the format, structure, etc. of how data will be conveyed to a SP;
   Along with possibly among other things edit and validation, encoding and/or decoding, alteration or replacement or substation, de-duplication, filtering, etc.
3) Interacting with a SP. Such interactions may employ any combination of one or more mechanisms including possibly inter alia an Application Programming Interface (API), an Electronic Data Interchange (EDI) facility, File Transfer Protocol (FTP), one or more proprietary or standards-based application-level and/or transport-level protocols, a publish-subscribe paradigm, a push-pull model, file exchanges, a (courier, overnight, etc.) delivery service, postal mail, etc. and may utilize among other things Extensible Markup Language (XML) documents, Comma-Separate Values (CSV) files, name-value pairs, etc.

Such mechanisms may comprise one or more servers, gateways, interfaces, etc. and may leverage inter alia any combination of dedicated communication circuit, open Internet, Virtual Private Network (VPN), etc.

Such interactions may comprise various messages, including inter alia any combination of one or more of a request message, a response message, a status or inquiry message, a confirmation message, etc. Such messages may be generated on a scheduled basis, on an ad hoc (e.g., as needed) basis, etc.

The activities of enumerated item #2 above may be controlled, managed, driven, etc. by a suite of flexible, extensible, and dynamically configurable rules. Rules may exist for inter alia (local, regional, national, etc.) privacy requirements; each data source system, component, etc.; data manipulation, alteration, etc. operations; etc.

A PE may comprise inter alia any combination of one or more of local or on-premise resources, cloud resources, etc.

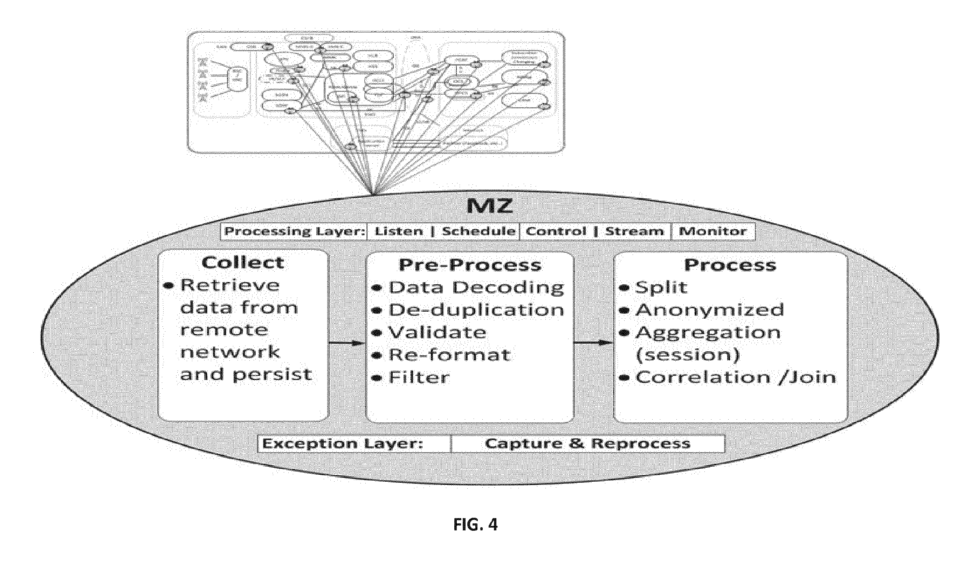

Returning again to the above example where a DP is a wireless operator or carrier, FIG. 4 extends the hypothetical OE that was presented in FIG. 3 to highlight possible Mediation Zones (MZs) within which aspects of a PE may reside and identify various of the activities that may take place within a PE. The mediation zones may include a Processing Layer and an Exception Layer. The Processing Layer may collect, pre-process, and process data received from a remote network. The Exception layer may capture and reprocess the data.

### Service Provider

A Service Provider (SP) is an entity that inter alia (1) receives, collects, etc. data from one or more DPs, (2) performs a range of processing operations, and (3) supports the reporting, analysis, etc. needs of one or more DCs.

A SP may, for example, be realized as an independent service bureau, an element of or within some organization (such as possibly inter alia a financial institution, a retail establishment, an on-line retailer, a corporate entity, etc.), multiple entities (such as for example those just listed) or aspects of same working together, etc. It will be readily apparent to one of ordinary skill in the relevant art that numerous other arrangements are easily possible.

A SP may comprise inter alia one or more Processing Environments (PE, such as for example PE_{q} → PE_{z} in FIG. 1), each of which may comprise inter alia various processing elements (such as for example computer platforms, application software, connectivity, etc.) and/or one or more repositories (such as for example databases, files, stores, etc.), and one or more additional repositories (R, such as for example R_{q} → R_{z} in FIG. 1) such as for example databases, files, stores, etc.

A processing element may comprise inter alia computer platforms, application software, connectivity, etc. that support among other things a range of processing activities including among other things the examination, parsing, augmentation, manipulation, replacement, editing, validation, mapping, aggregation, enhancement, etc. of one or more elements of received data with the optional preservation of aspects of the results, outcome, etc. of various of the activities in for example one or more repositories.

A repository may comprise inter alia databases, files, stores, etc.

The activities that were described above may be controlled, managed, driven, etc. by a suite of flexible, extensible, and dynamically configurable rules. Rules may exist for inter alia (local, regional, national, etc.) privacy requirements; each DP; each Data Consumer (DC); scheduled processing activities; data enhancements; data aggregations; etc.

Different types, classes, etc. of DC users may be possible such as for example a regular user, a super user, an administrator, etc. Each user may have inter alia an associated set of access credentials (such as for example an identifier and a password), assigned permissions, defined access rights, etc. which may employ among other things any combination of one or more of Access Control Lists (ACLs), role-based paradigms, capability-based models, etc.

A SP may comprise an administrator that inter alia provides component, rule, etc. management and administration through, as just one example, a Web-based interface. It will be readily apparent to one of ordinary skill in the relevant art that numerous other interfaces (e.g., a data feed, an API, etc.) are easily possible.

A SP may leverage, incorporate, etc. the capabilities, features, functions, technologies, etc. of one or more external entities and/or one or more external data sources (of for example demographic information, psychographic information, financial information, etc.).

### Data Consumer

A DC is an entity that supports the consumption of data through inter alia reporting, analysis, etc. activities.

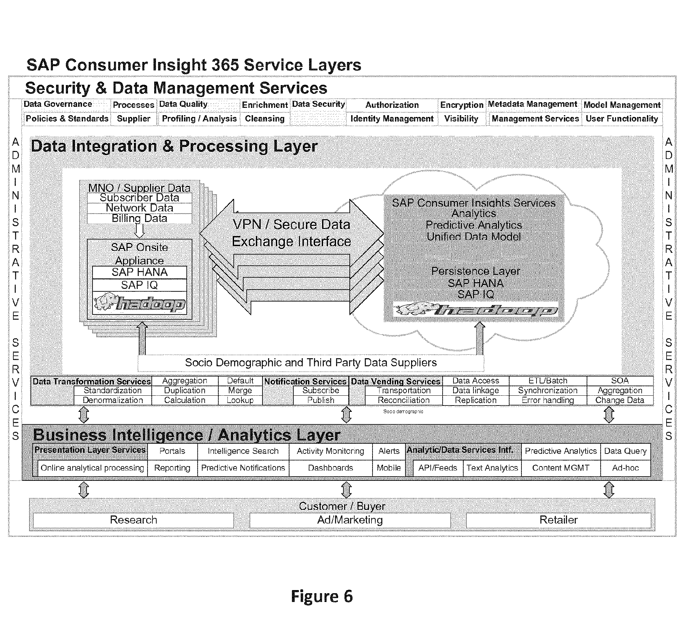

A DC may employ various applications including for example any combination of one or more of inter alia web-based applications (incorporating for example HTML5, Cascading Style Sheets, JavaScript, etc.), hybrid applications (incorporating for example containerization, etc.), and native applications. FIG. 6 depicts, among other things, some of the functionality exposed to a DC.

A DC may comprise any number of physical devices such as for example any combination of one or more of inter alia a wired device, a wireless device, a mobile phone, a feature phone, a smartphone, a tablet computer (such as for example an iPad^{™}), a mobile computer, a handheld computer, a desktop computer, a laptop computer, a server computer, an in-vehicle (e.g., audio, navigation, etc.) device, an in-appliance device, a Personal Digital Assistant (PDA), a game console, a Digital Video Recorder (DVR) or Personal Video Recorder (PVR), cable system or other set-top-box, an entertainment system component such as a television set, etc.

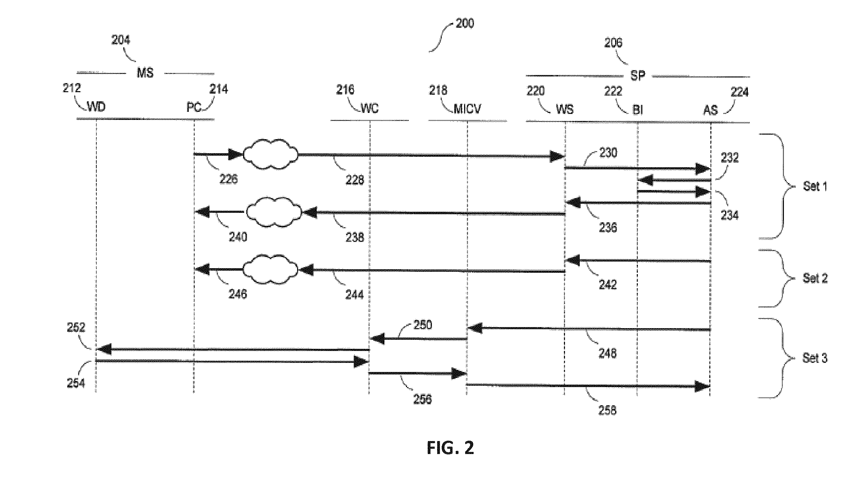

A DC user may optionally complete a registration process, as described in connection with FIG. 2. It is important to note that a registration process may be initiated, completed, managed, etc. through any combination of one or more of channels including, inter alia, the World Wide Web (via, for example, a Web site that is operated by a SP), messaging paradigms (such as for example SMS, MMS, etc.), Electronic Mail (E-Mail) messages, Instant Messaging (IM), conventional mail, telephone, Interactive Voice Response (IVR) facility, etc.

A DC user may have inter alia an associated set of access credentials (such as for example an identifier and a password), assigned permissions, defined access rights, etc.

An interaction between a DC and a SP may employ any combination of one or more mechanisms including possibly inter alia an Application Programming Interface (API), an Electronic Data Interchange (EDI) facility, File Transfer Protocol (FTP), one or more proprietary or standards-based application-level and/or transport-level protocols, a publish-subscribe paradigm, a push-pull model, file exchanges, a (courier, overnight, etc.) delivery service, postal mail, etc. and may utilize among other things Extensible Markup Language (XML) documents, Comma-Separated Values (CSV) files, name-value pairs, etc.

Such mechanisms may comprise one or more servers, gateways, interfaces, etc. and may leverage inter alia any combination of dedicated communication circuit, open Internet, Virtual Private Network (VPN), etc.

Interactions between a DC and a SP may comprise various messages, including inter alia any combination of one or more of a request message, a response message, a status or inquiry message, a confirmation message, etc. Such messages may be generated on a scheduled basis, on an ad hoc (e.g., as needed) basis, etc.

Such interactions may employ any combination of one or more mechanisms including inter alia a (SMS, MMS, Internet Protocol (IP) Multimedia Subsystem (IMS), etc.) message exchange, a Wireless Application Protocol (WAP) exchange, a structured or an unstructured data transfer, a data transfer operation atop one or more proprietary or standards-based protocols, an Electronic Message (E-Mail) exchange, an Instant Messaging (IM) exchange, a voice telephone call, Wi-Fi, Near Field Communication (NFC), etc.

FIG. 2 and reference numeral 200 illustrate various of the exchanges or interactions that might occur under a registration process. A registration process may be tailored (e.g., the range of information gathered, the scope of access subsequently granted, etc.) to the class of user--e.g., different types, categories, etc. of users may complete different registration processes. Of interest and note in the diagram are the following entities:
A) MS 204 WD 212. For example, a Wireless Device (WD) belonging to Mary, a hypothetical DC user (MS), such as mobile telephone, BlackBerry, PalmPilot, etc.
B) MS 204 Personal Computer (PC) 214. For example, a home, work, etc. PC of a MS.
C) WC 216. The provider of service for a MS' WD.
D) MICV 218. A Messaging Inter-Carrier Vendor (MICV). Although not required, the use of a MICV may provide certain advantages.
E) SP 206 Web Server (WS) 220. A publicly-available Web site that is optionally provided by a SP.
F) SP 206 Billing Interface (BI) 222. A single, consolidated interface that a SP may employ to easily reach, inter alia, one or more external entities such as a credit card or debit card clearinghouse, an operator or carrier billing system, a service bureau that provides access to multiple operator or carrier billing systems, etc.
G) SP 206 Application Server (AS) 224. A supportive AS environment.

It is important to note that while in FIG. 2 the MS 204 WD 212 and MS 204 PC 214 entities are illustrated as being adjacent or otherwise near each other, in actual practice the entities may, for example, be physically located anywhere.

In FIG. 2 the exchanges that are collected under the designation Set 1 represent the activities that might take place as a user "Mary" completes a registration process with a SP:
A) Mary 204 uses one of her PCs 214 to visit a SP's 206 WS 220 to, possibly among other things, complete a service registration process (226 → 228).
B) SP's 206 WS 220 interacts with SP's 206 AS 224 to, possibly among other things, commit some or all of the information that Mary 204 provided to a data repository (e.g., a database), optionally complete a billing transaction, etc. (230).
C) As appropriate and as required a BI 222 completes a billing transaction (232 → 234).
D) SP's 206 WS 220 responds appropriately (e.g., with the presentation of a confirmation message, etc.) (238 → 240).

The specific exchanges that were described above (as residing under the designation Set 1) are illustrative only and it will be readily apparent to one of ordinary skill in the relevant art that numerous other exchanges are easily possible. For example, the collected information may be reviewed, confirmed, etc. through one or more manual and/or automatic mechanisms. For example, the registration process may be completed through any combination of one or more channels including, inter alia, the World Wide Web (via, for example, a Web site that is operated by a SP), wireless messaging (SMS, MMS, etc.), Electronic Mail (E-Mail) messages, Instant Messaging (IM), conventional mail, telephone, Interactive Voice Response (IVR) facility, etc.

During the registration process described above a range of information may be captured from a MS including, inter alia:
A) Identifying Information. For example, possibly among other things, name, address, landline and wireless Telephone Numbers (TNs), E-Mail addresses, IM names/identifiers, a unique identifier and a password, etc.
B) Preference Information. For example, information on, possibly inter alia, a MS' usage patterns, needs, etc.
C) Billing Information. Different service billing models may be offered including, inter alia, a fixed one-time charge, a recurring (monthly, etc.) fixed charge, a recurring (monthly, etc.) variable charge, etc. Different payment mechanisms may be supported including, possibly among other things, credit or debit card information, authorization to place a charge on a MS's phone bill, etc.
D) Other Information. Additional, possibly optional, information.

The specific pieces of information that were described above are illustrative only and it will be readily apparent to one of ordinary skill in the relevant art that numerous other pieces of information (e.g., additional Preference Information, scheduled daily/weekly/etc. reporting desired and/or on-demand reporting desired, etc.) are easily possible.

As noted above, the information that Mary provided during the registration process may be preserved in a data repository (e.g., a database) and may optionally be organized as a MS Profile.

The content of Mary's profile may be augmented by a SP to include, as just a few examples of the many possibilities, internal and/or external demographic, psychographic, sociological, etc. data.

As noted above, a SP's BI may optionally complete a billing transaction. The billing transaction may take any number of forms and may involve different external entities (e.g., a WC's billing system, a carrier billing system service bureau, a credit or debit card clearinghouse, etc.). The billing transaction may include, inter alia:
A) The appearance of a line item charge on the bill or statement that a MS receives from her WC.
B) The charging of a credit card or the debiting of a debit card.
C) The (electronic, etc.) transfer of funds.
D) The generation of an invoice, statement, etc.

In FIG. 2 the exchanges that are collected under the designation Set 2 represent the activities that might take place as SP's 206 AS 224 dispatches to Mary 204 one or more confirmation E-Mail messages (242 → 246).

The specific exchanges that were described above (as residing under the designation Set 2) are illustrative only and it will be readily apparent to one of ordinary skill in the relevant art that numerous other exchanges are easily possible. For example, any of the indicated activities (such as (242 → 246) may be repeated any number of times.

In FIG. 2 the exchanges that are collected under the designation Set 3 represent the activities that might take place as SP's 206 AS 224 dispatches one or more confirmation SMS, MMS, etc. messages to Mary's 204 WD 212 (248 → 252) and Mary 204 optionally replies or responds to the message(s) (254 → 258).

In the instant example the messages are shown traversing a MICV 218.

The SP 206 may employ any number of addressing artifacts as its source address (and to which it would ask users of its service to direct any reply messages) including inter alia a Short Code (SC) or a regular TN.

The specific exchanges that were described above (as residing under the designation Set 3) are illustrative only and it will be readily apparent to one of ordinary skill in the relevant art that numerous other exchanges are easily possible.

The Set 1, Set 2, and Set 3 exchanges that were described above are illustrative only and it will be readily apparent to one of ordinary skill in the relevant art that numerous other exchanges are easily possible. For example, possibly inter alia, the registration information that was described above may subsequently be managed (e.g., existing information may be edited or removed, new information may be added, etc.) through any combination of one or more channels including, inter alia, a SP's WWW facility, wireless messaging (SMS, MMS, IMS, etc.), E-Mail messages, IM exchanges, conventional mail, telephone, IVR facilities, etc.

Referring again to FIG. 1, for a particular DP, PEs and Rs may reside in the DP, may reside in a SP, may reside in both the DP and a SP (e.g., in a distributed fashion) and may comprise inter alia any combination of one or more of local or on-premise resources, cloud resources, etc.

A PE may among other things leverage hardware (such as for example platform clustering paradigms, network traffic routing and switching mechanisms, etc.) and/or software (such as for example Operating Systems (OSs), file systems, etc.) that provide support for inter alia data intensive operations (e.g., big data, fast data, etc.).

The repositories that were described above may encompass among other things any combination of one or more of conventional Relational Database Management Systems (RDBMSs), Object Database Management Systems (ODBMS), conventional in-memory Database Management Systems (DBMS), specialized facilities such as SAP HANA, or equivalent data storage and management facilities.

Various of the request, response, confirmation, etc. interactions that were described above may optionally contain any combination of one or more of information elements (such as for example a relevant or applicable factoid, a piece of Product information, etc.), advertisements, promotional items, coupons, vouchers, surveys, questionnaires, gift cards, retailer credits, etc. Such material may be selected statically or randomly (from for example a repository of defined material), may be location-based (for example, selected from a pool of available material based on possibly inter alia information about the current physical location of a user's device), may be product-specific, etc.

For convenience and ease of exposition a single SP is depicted in FIG. 1. Other arrangements are easily possible including for example two, three, or more entities (such as inter alia retailers, service bureaus, intermediaries, aggregators, software firms, etc.) performing various combinations of the SP activities that were described above.

Various of the information that is conveyed to a DC may among other things be adapted to meet specific localization needs such as language, date and time format, etc. Such adaptations may be driven by among other things a user's preferences, information about the current physical location of a user, etc. and may leverage previously-prepared pools of material (such as for example a U.S.-specific pool of material, a U.K.-specific pool of material, a French-specific pool of material, etc.) and/or dynamically generate any localization-specific material that may become needed.

Among other things a SP may offer various reporting mechanisms including among other things scheduled (e.g., hourly, daily, weekly, etc.) reporting, on-demand reporting, scheduled (e.g., hourly, daily, weekly, etc.) data mining operations, and/or on-demand data mining operations with results delivered through any combination of one or more of (SMS, MMS, etc.) messaging, a Web-based facility, E-Mail, data transfer operations, a Geographic Information System (GIS) or other visualization facility, etc. Such reporting mechanisms may draw from repositories within a SP and/or any number of data sources external to a SP.

The interactions that were described above may employ among other things various addressing artifacts such as inter alia telephone numbers, short codes, IP addresses, E-Mail address, IM handles, Session Initiation Protocol (SIP) addresses, Uniform Resource Locators (URLs), etc.

Various of the interactions that were described above may optionally leverage, reference, etc. information on the current physical location of a user's device as obtained through inter alia a one or more of a Location-Based Service (LBS) facility, a Global Positioning System (GPS) facility, etc. to among other things enhance security, provide more applicable or appropriate information, etc.

The rules that were described above (e.g., in connection with a DP and/or a SP) may be created, crafted, edited, managed, etc. by a system administrator, by a user, by an application developer, etc. using among other things a GUI facility (that may offer among other things a What You See Is What You Get (WYSIWYG) capability), APIs, computer code libraries, etc.

Various of the interactions, activities, etc. that were described above may result in for example one or more billing, financial, etc. transactions.

Any number of revenue share plans may be supported with as just one example a SP acting as an plan administrator for all of the different entities residing upstream and/or downstream of the Service Provider and completing inter alia various billing, fund collection, fund distribution, etc. operations.

Various of the interactions that were described above comprise, leverage, employ, etc. any combination of one or more of inter alia a (SMS, MMS, IMS, etc.) message exchange, a WAP exchange, a structured or an unstructured data transfer, a data transfer operation atop one or more standards-based protocols (such as for example TCP/IP) and/or proprietary protocols, an E-Mail exchange, an IM exchange, Wi-Fi, a NFC exchange, etc.

The various interactions that were described above are illustrative only and it will be readily apparent to one of ordinary skill in the relevant art that numerous other interactions are easily possible. For example, and inter alia, any combination of a depicted interaction may be repeated any number of times.

The user registration process, described above in connection with FIG. 2, may take place through any combination of one or more channels (including inter alia a Web-based interface, postal mail, telephone, etc.), may be tailored (e.g., the range of information gathered, the scope of access/privileges/etc. subsequently granted, etc.) to the class of user - e.g., different types, categories, etc. of users may complete different registration processes; may gather a range of identifying, preference, billing, etc. information; and may preserve, store, etc. aspects of the gathered information in one or more repositories (e.g., databases) optionally organized as a user profile. Among other things a service provider may optionally augment a user profile with inter alia internal and/or external demographic, psychographic, sociological, financial, etc. data.

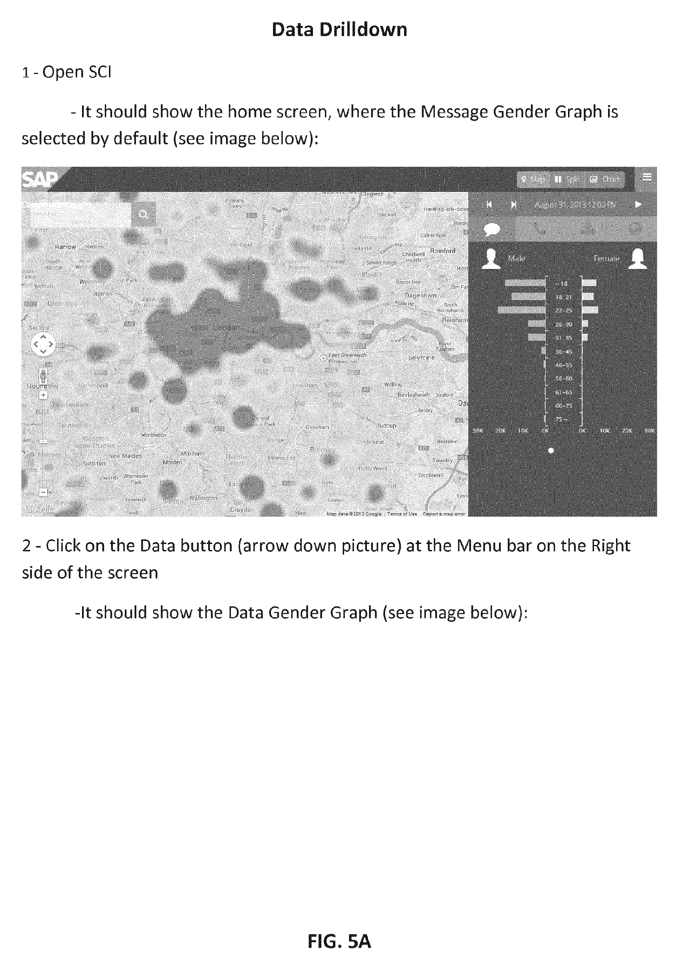

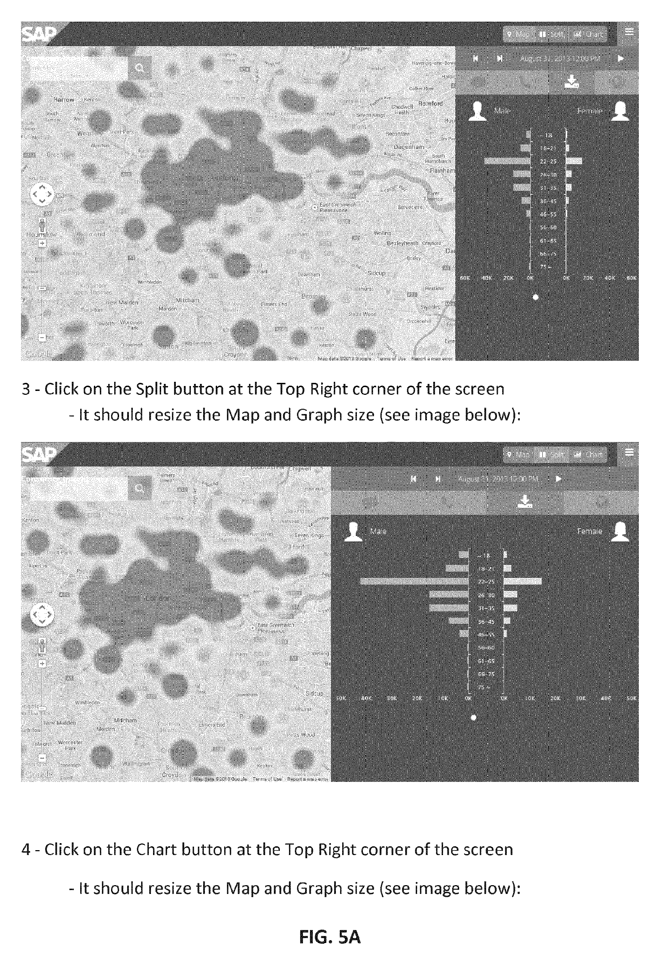

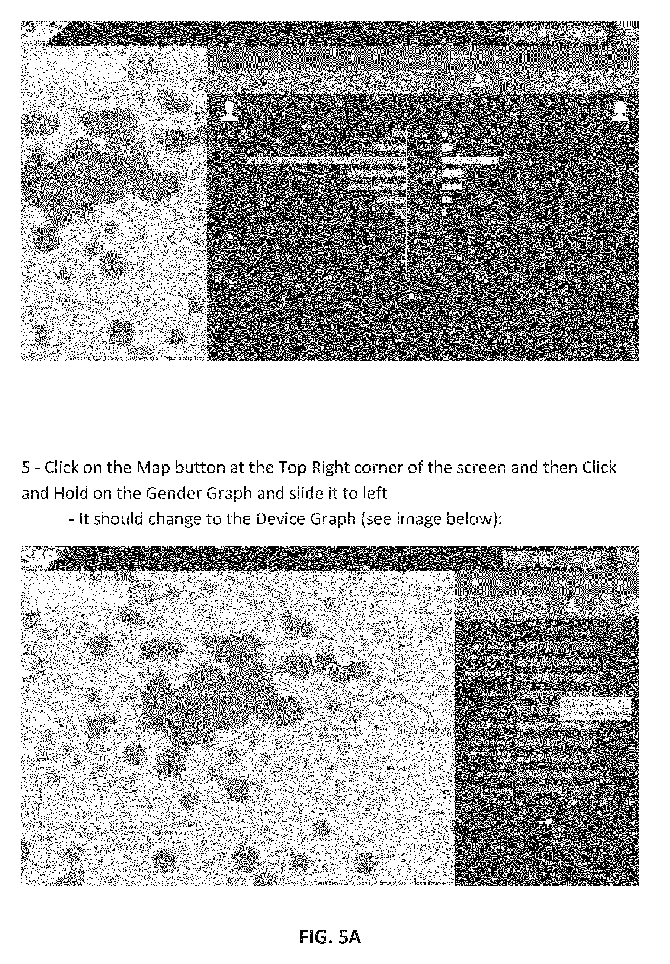

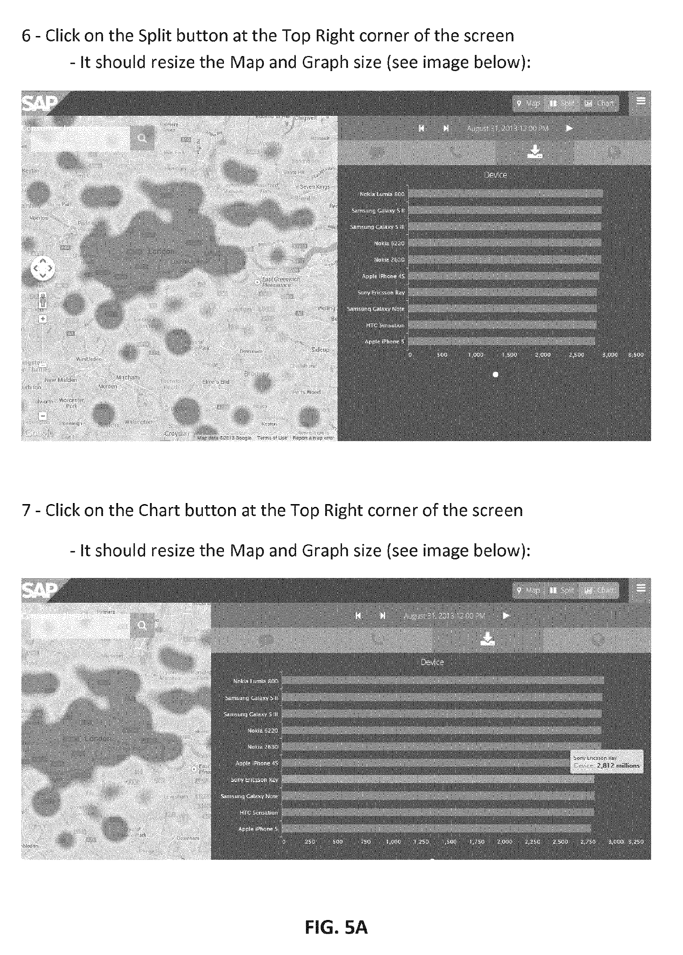

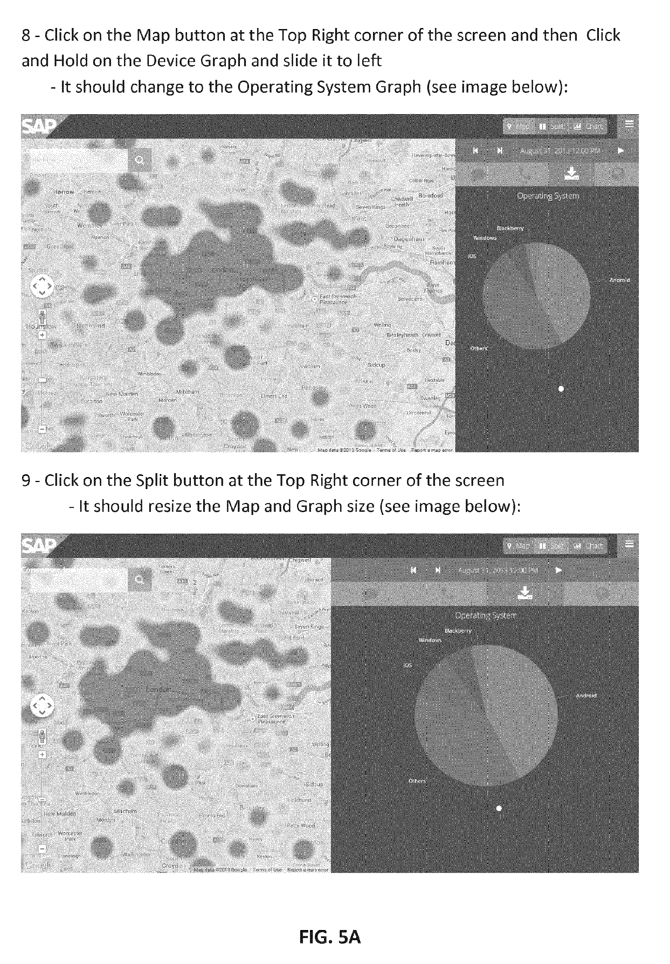

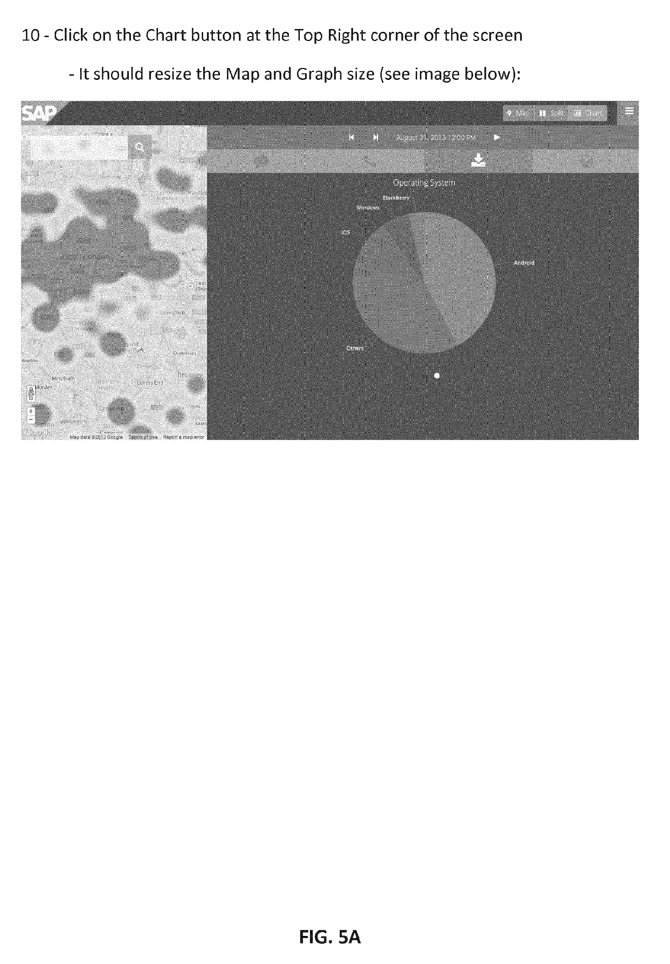

FIGs. 5A-5G illustrate example user interface screens consistent with embodiments described herein. More specifically a SP might make available to a DC through any one of several possible channels, including private and public network connections, any one or more of the following user interface screens that enable a user or DC to learn, in at least an aggregate fashion, the behaviors and trends of a plurality of mobile device users.

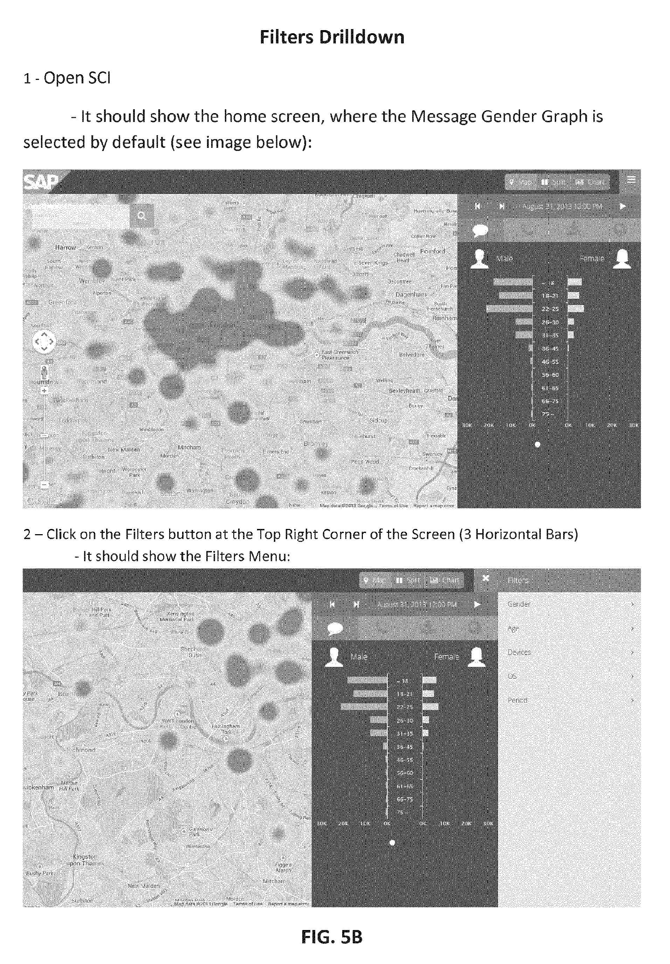

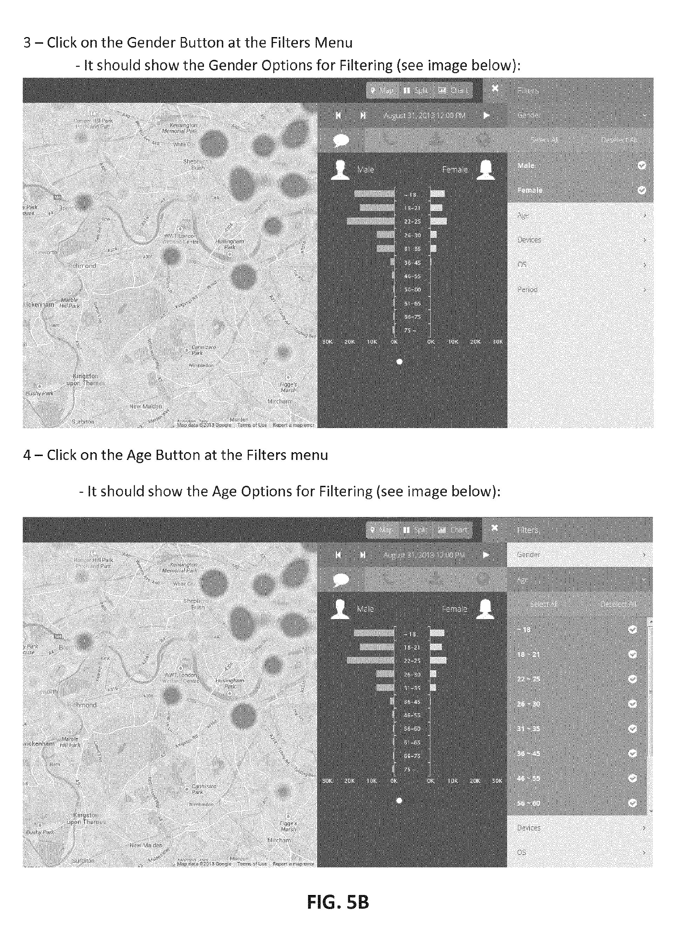

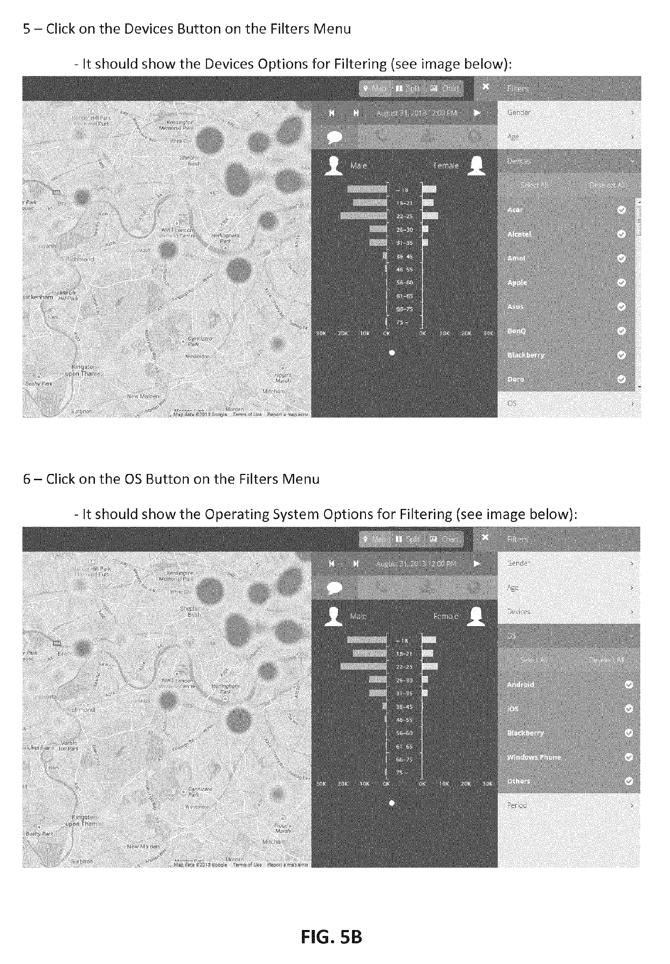

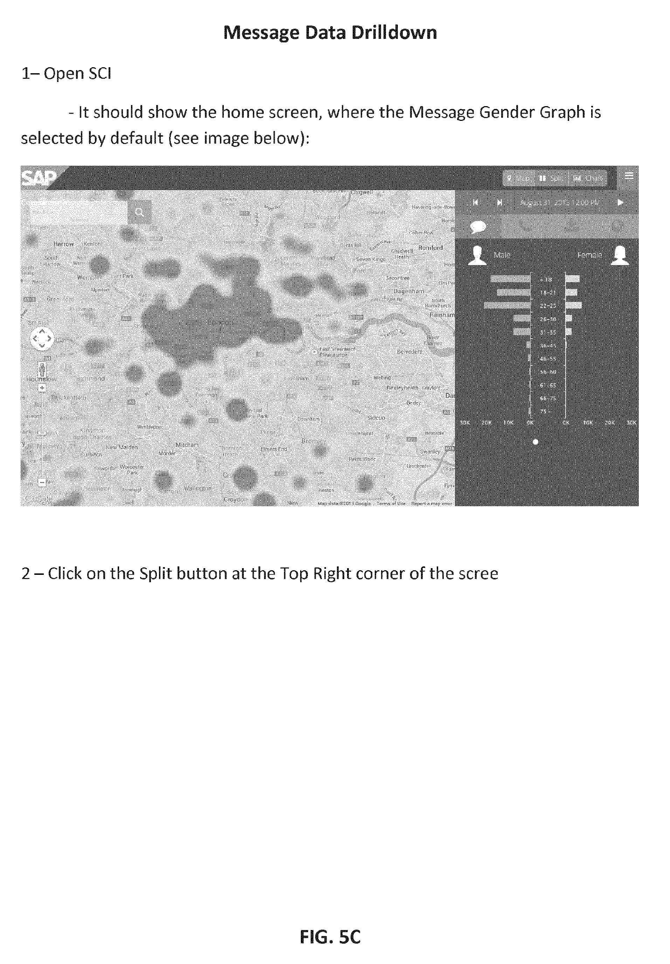

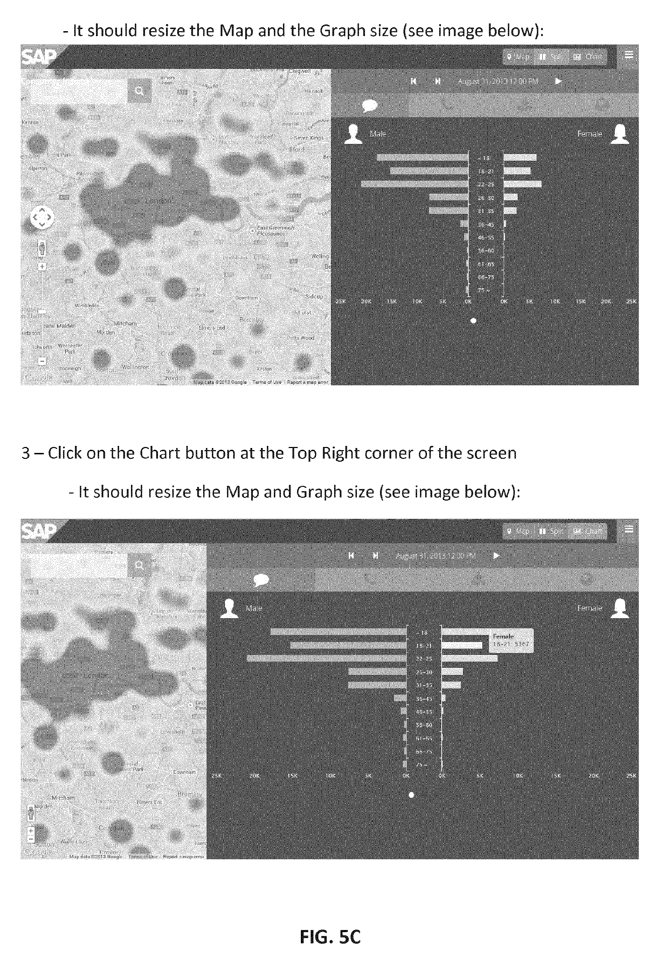

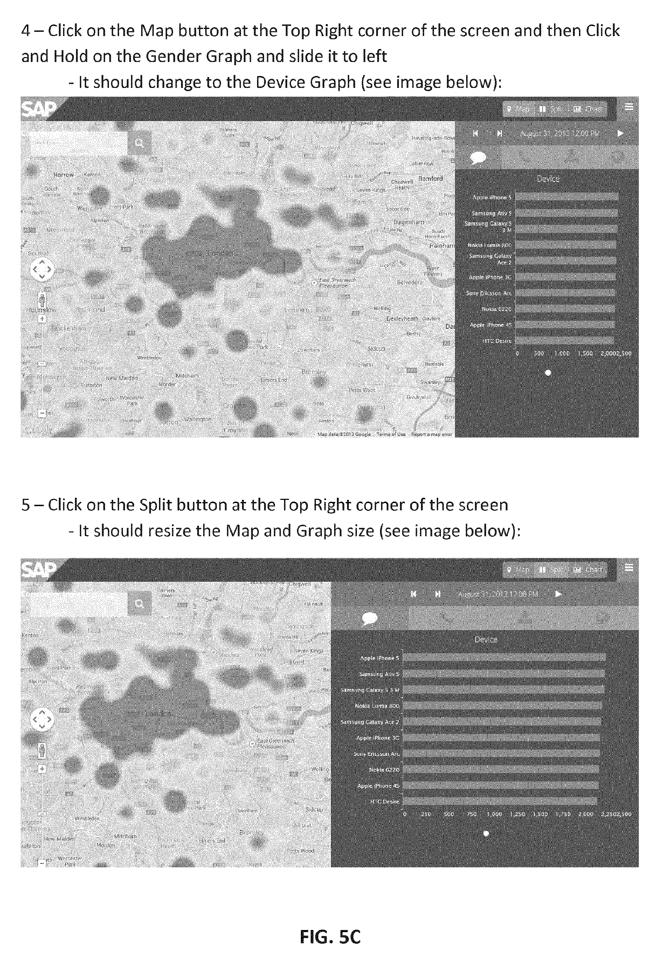

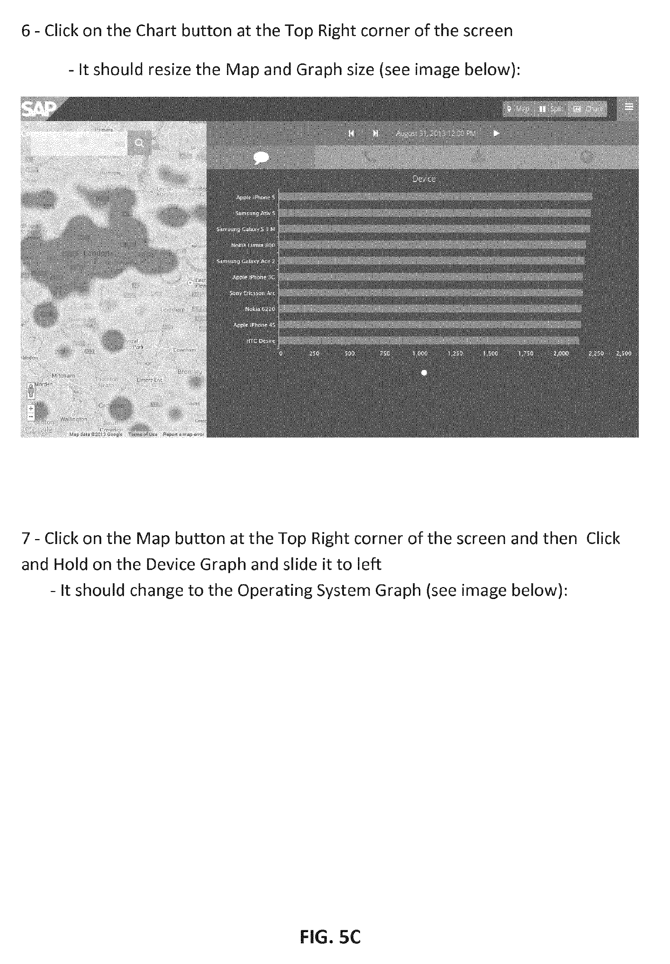

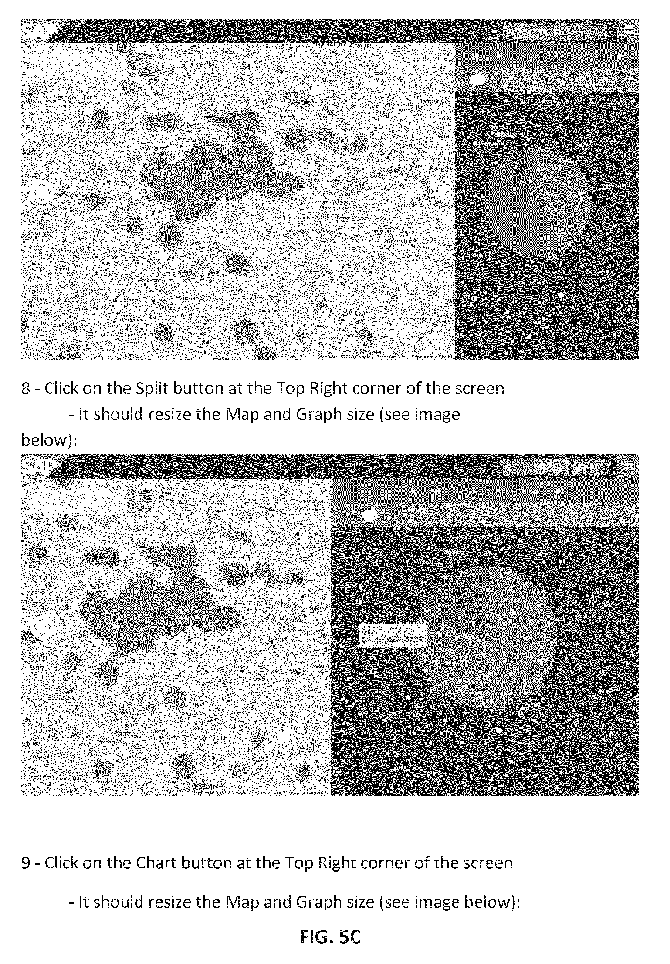

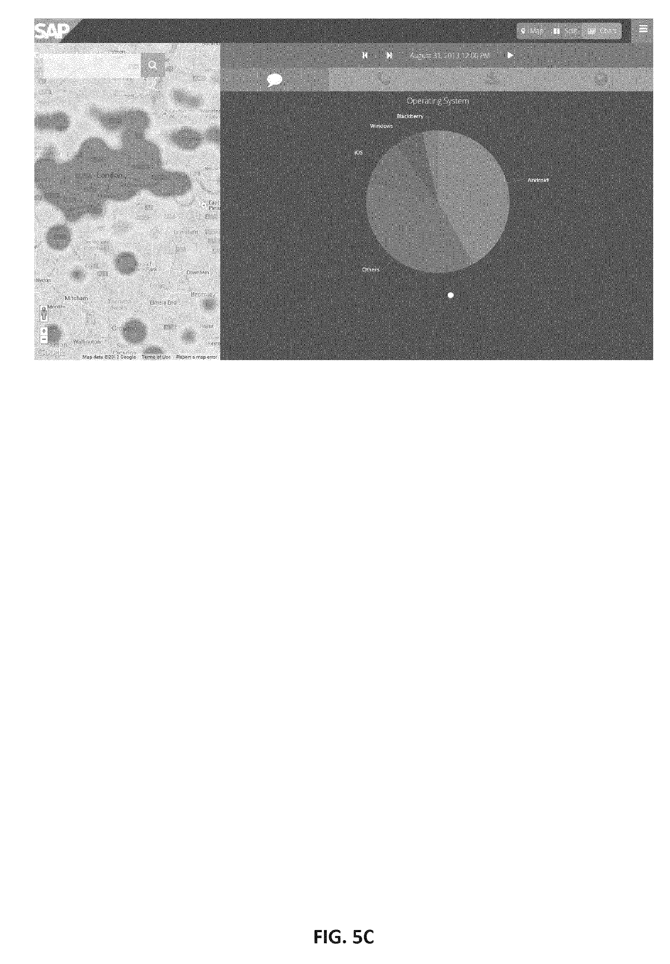

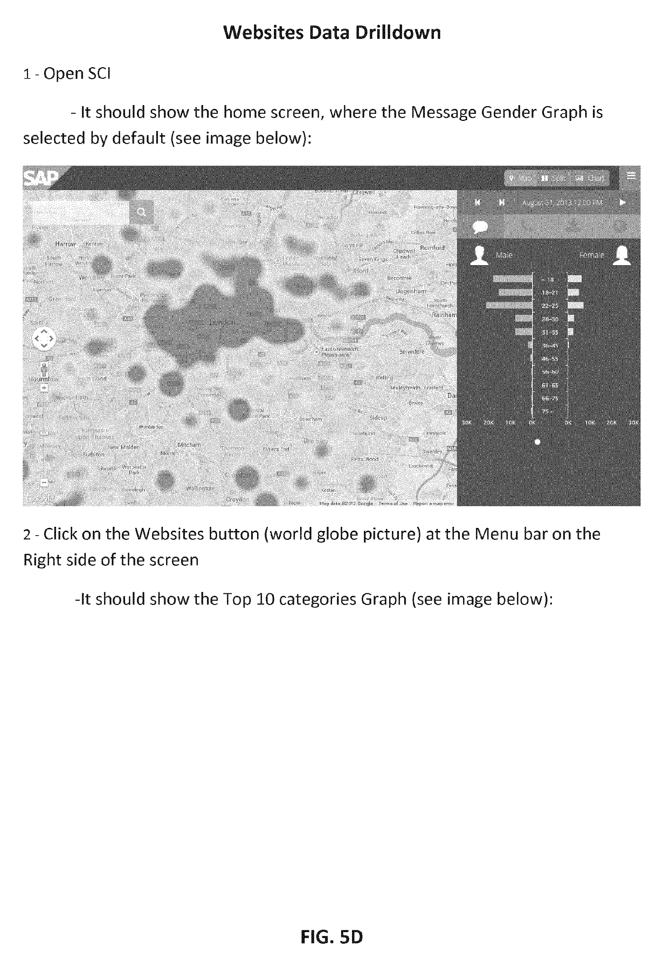

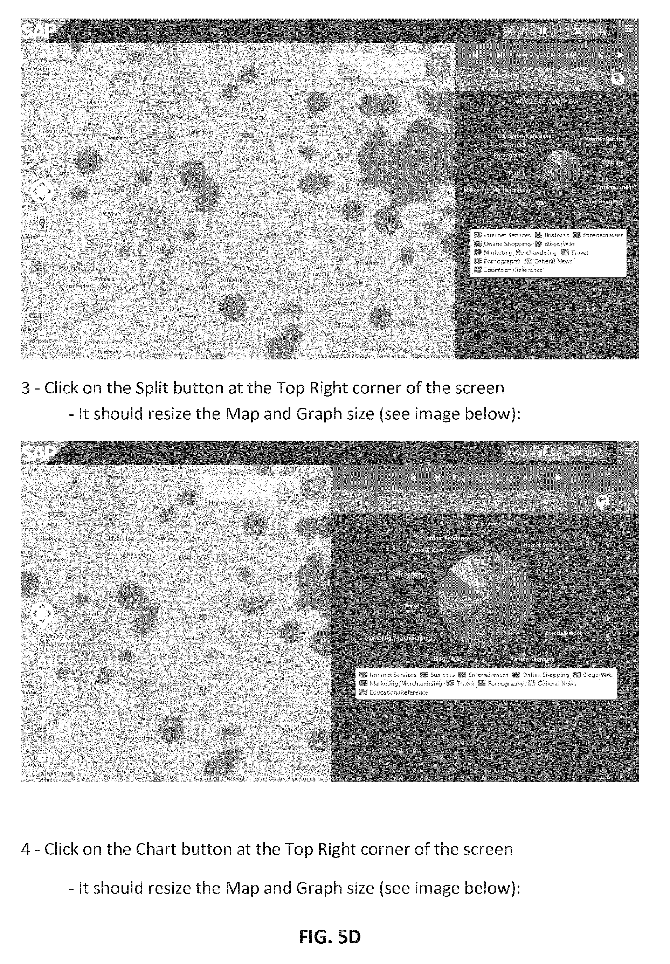

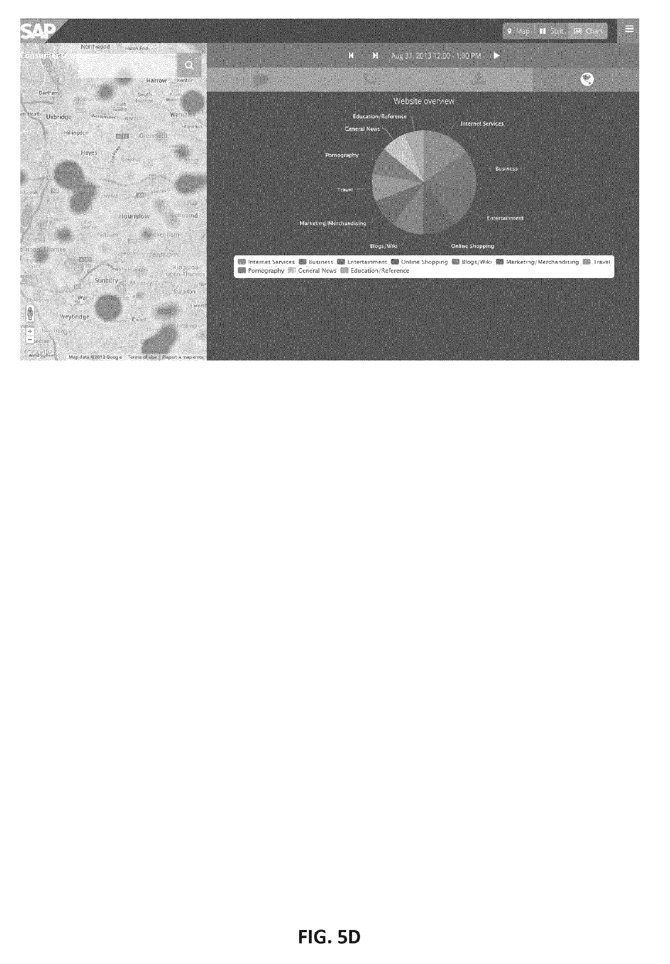

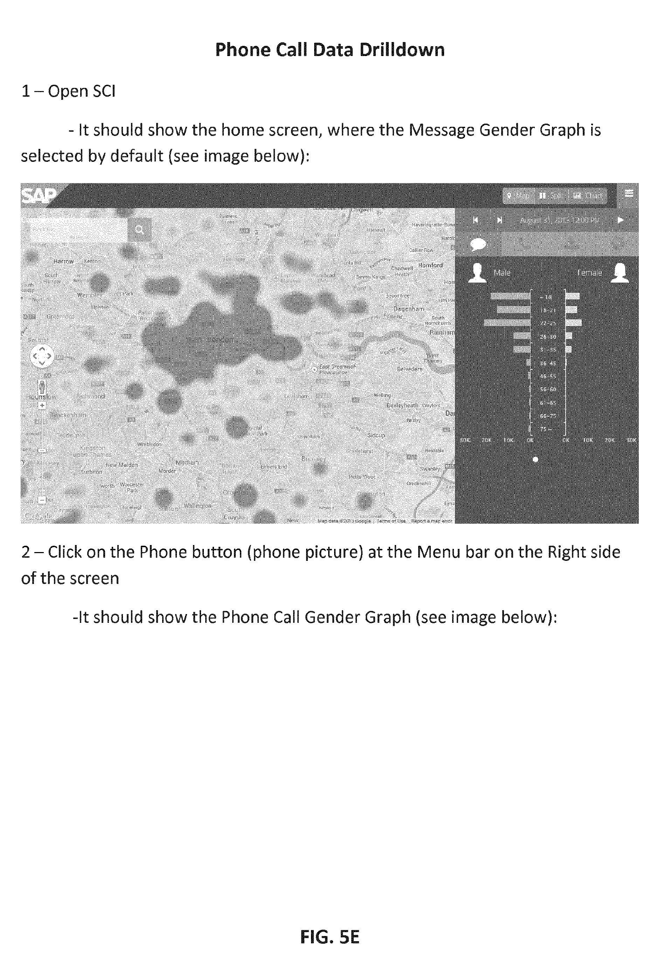

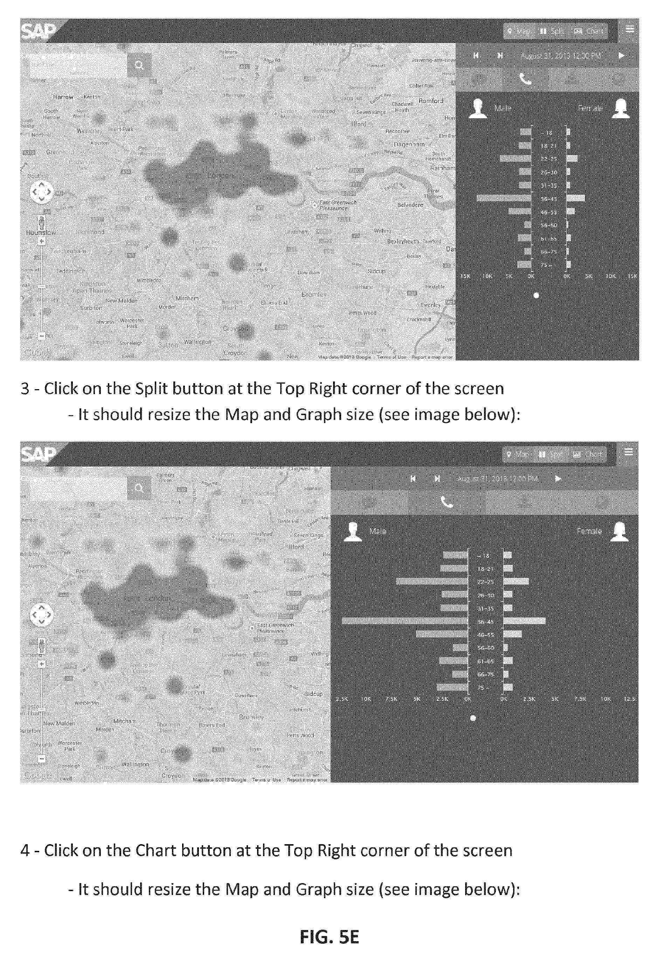

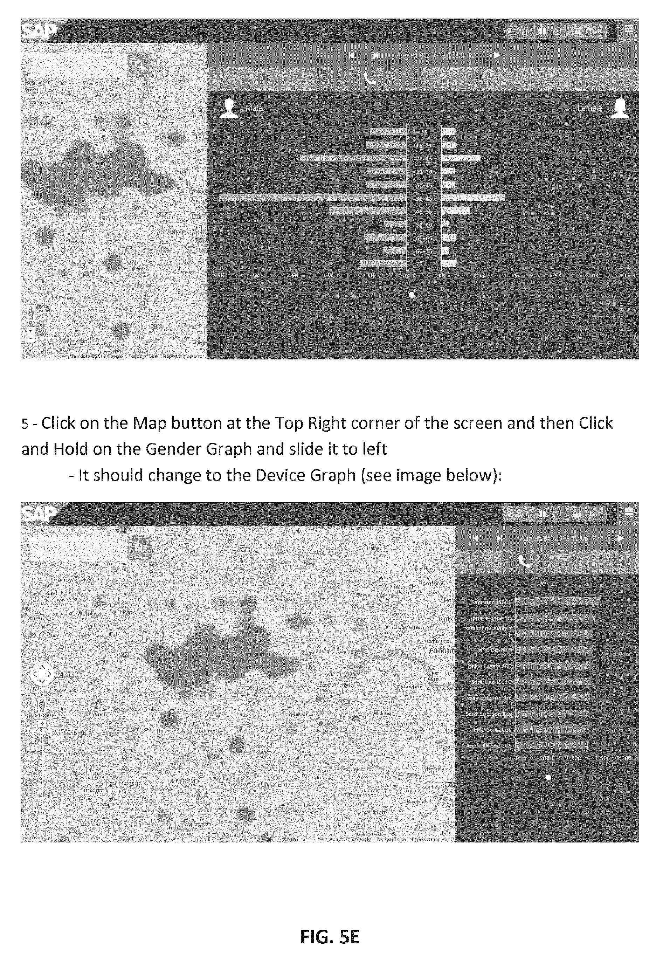

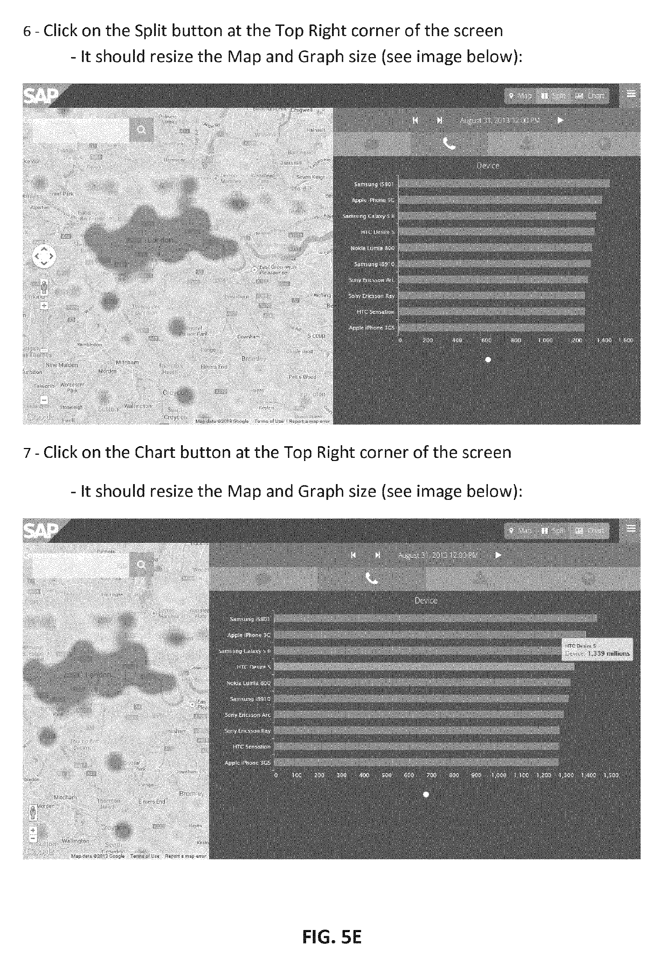

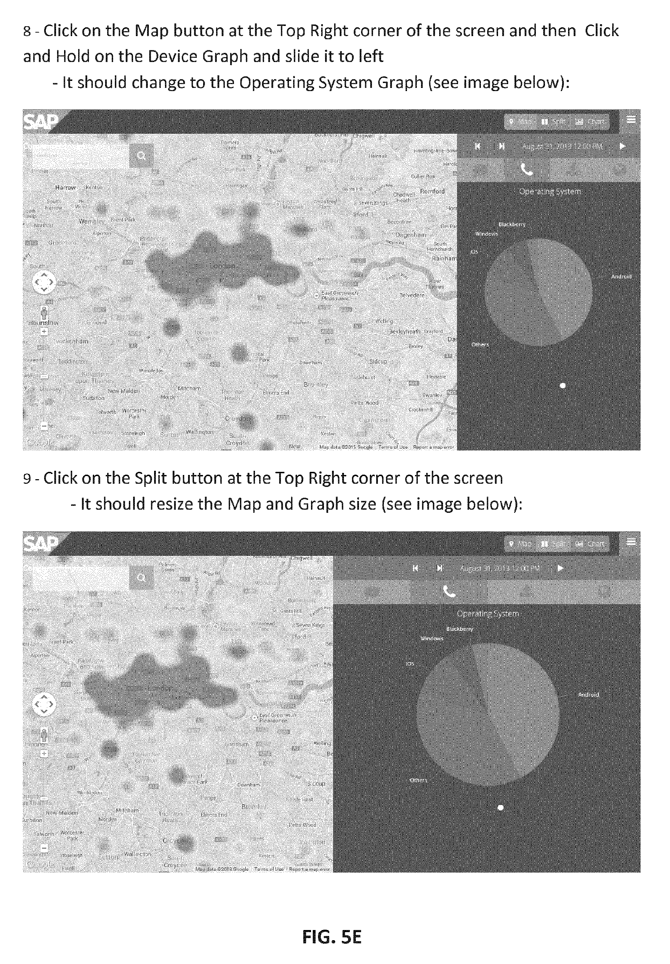

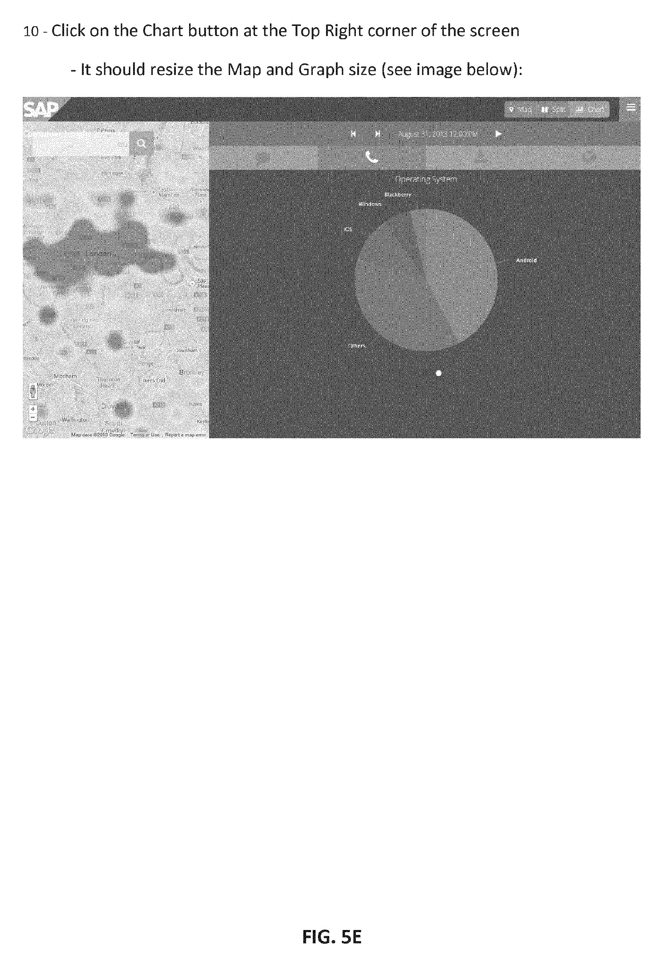

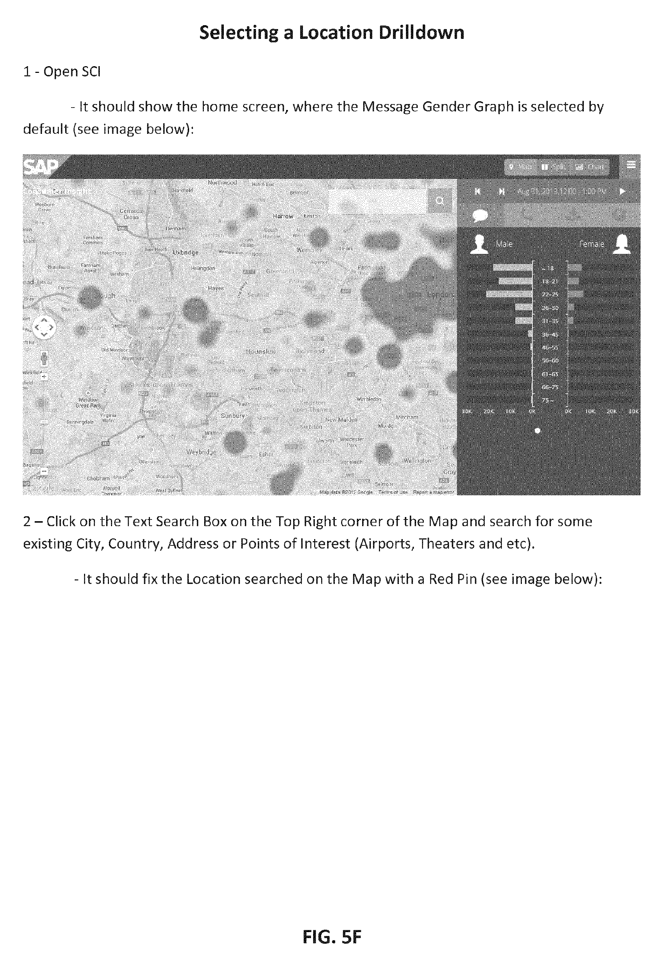

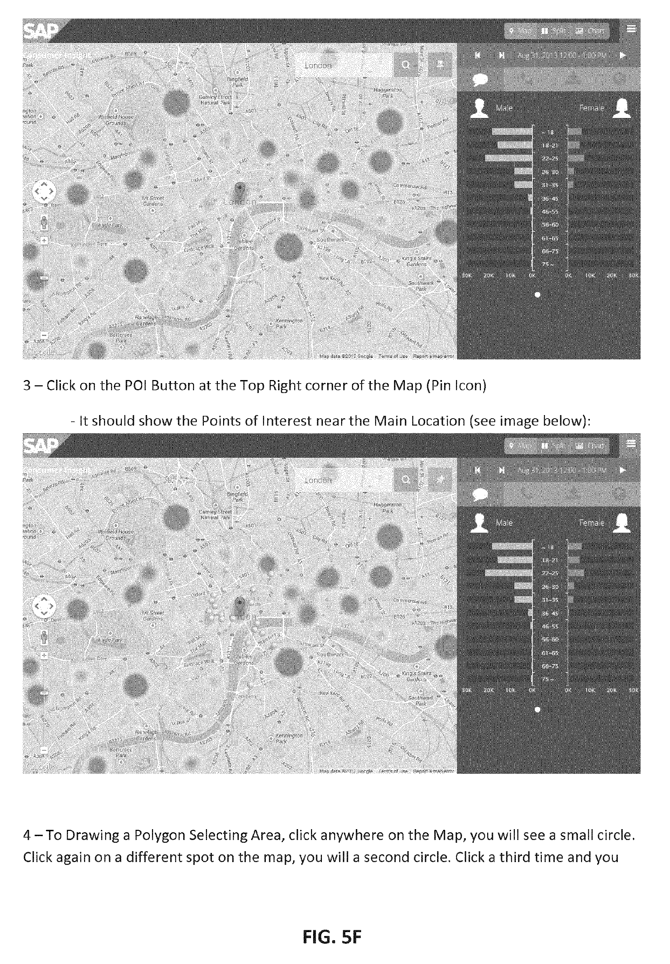

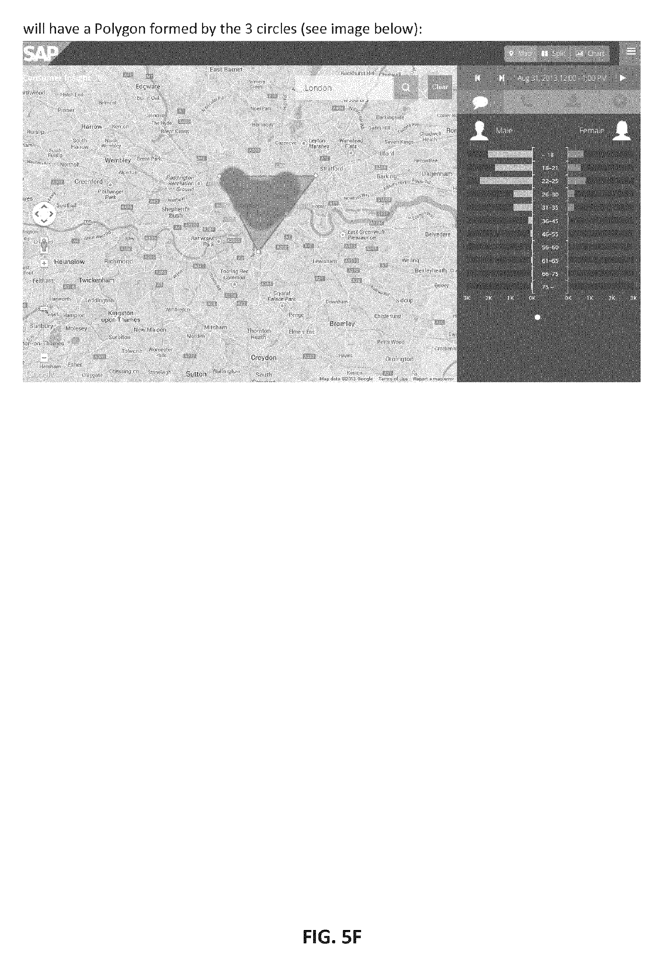

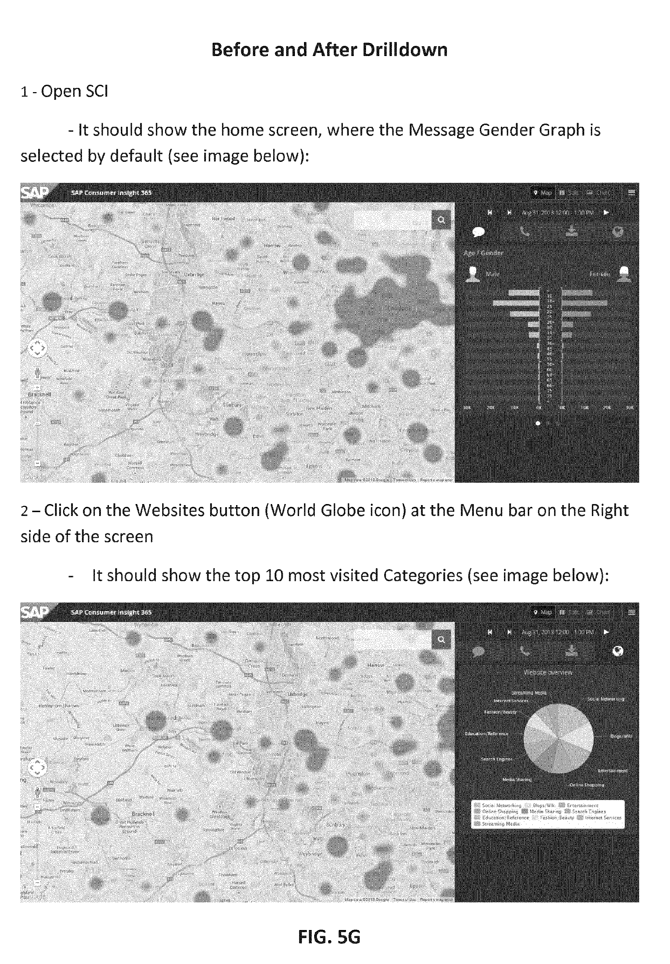

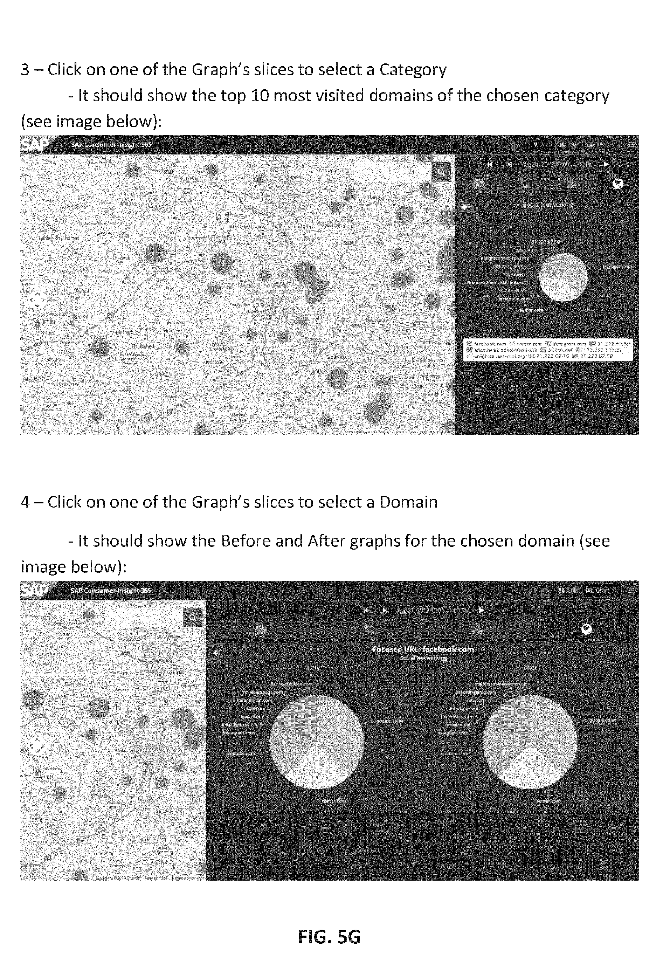

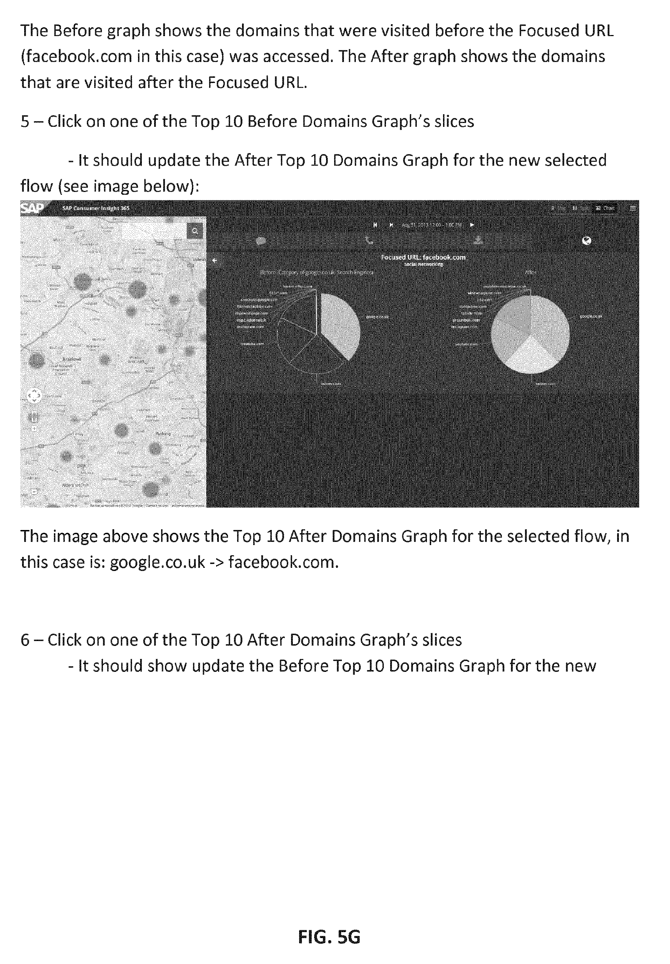

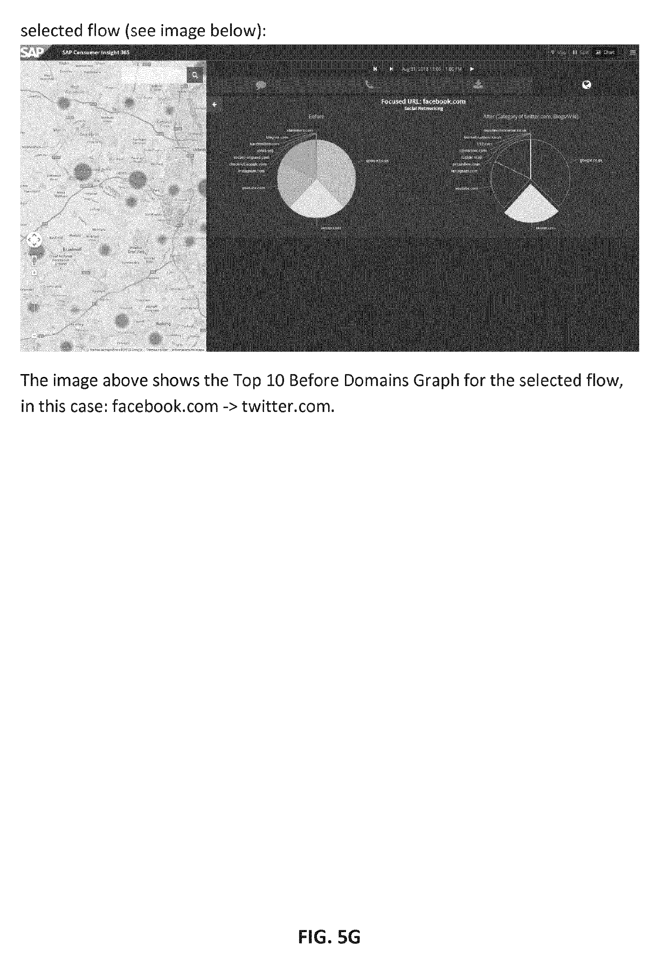

User interface screens include, but are not limited to:
Data Drilldown interfaces (FIG. 5A);
Filters Drilldown interfaces (FIG. 5B);
Message Data Drilldown interfaces (FIG. 5C);
Websites Data Drilldown interfaces (FIG. 5D);
Phone Call Data Drilldown interfaces (FIG. 5E);
Selecting a Location Drilldown interfaces (FIG. 5F); and
Before and After Drilldown interfaces (FIG. 5G).

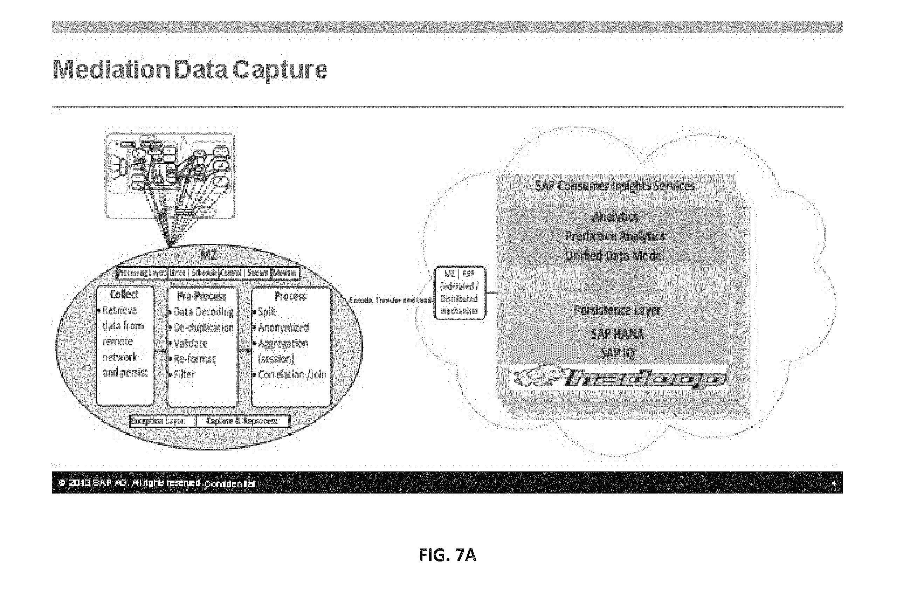

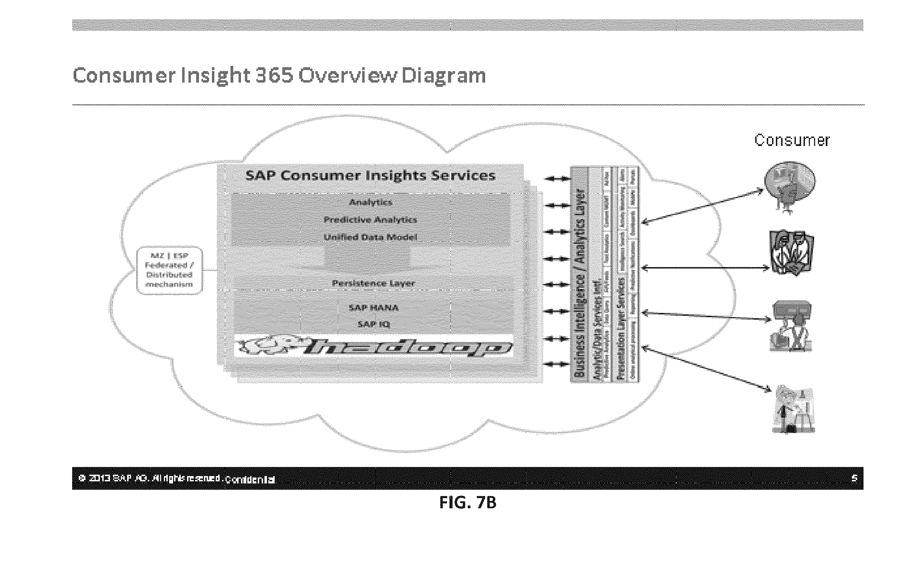

FIGs. 7A and 7B illustrate still other ways of understanding the overall architecture of the enhanced data collection and analysis techniques described herein.

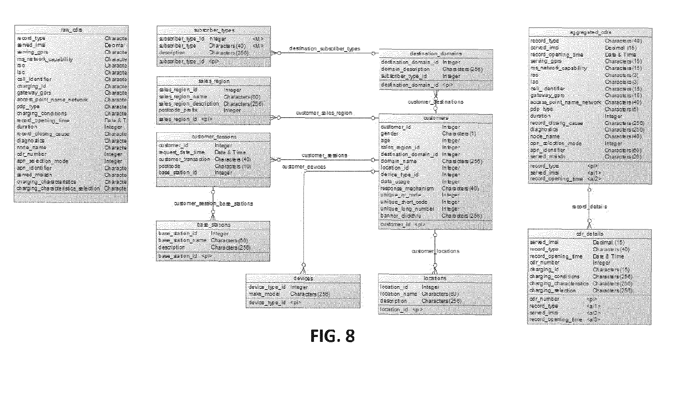

FIG. 8 illustrates an example data model that may be used in connection with the enhanced data collection and analysis techniques described herein.

The following are examples of use cases for SAP Consumer Insight 365.

Royalty payments. The enhanced data collection and analysis techniques described herein can create a taxonomy that will enable identification of all music, entertainment, etc. URLs (direct website access/APP access to those sites) that allow music content to be downloaded without the individual paying any royalty fee

Hardware usage. The enhanced data collection and analysis techniques described herein can create a taxonomy that will enable determination of, e.g., new handset provisioning. This would enable companies that provide advice to investors or organizations to make a more evidence based decision around buying stock from a top global brand and or buying stock at IPO. For example, a mobile phone company might allege that that have shipped over 30 million smartphones. SAP Consumer Insight 365 can generate a taxonomy to show how many smartphones of a certain brand are provisioned and active.

Motion mapping. The analytical power of SAP Consumer Insight 365 can be leveraged to present data as graphically rendered visualized activity. For example, it is possible, knowing mobile subscriber location information, to show people making their way to and from a major event like a football match, or to show the impact of a new mega shopping mall has on surround existing road, rail and public transport infrastructure.

Census data. SAP Consumer Insight 365 can be used to offer country level census data to help understand the new out of home behavior of consumers as they move, look for information , share information, enhance their shopping experience, and consume rich media content, etc.

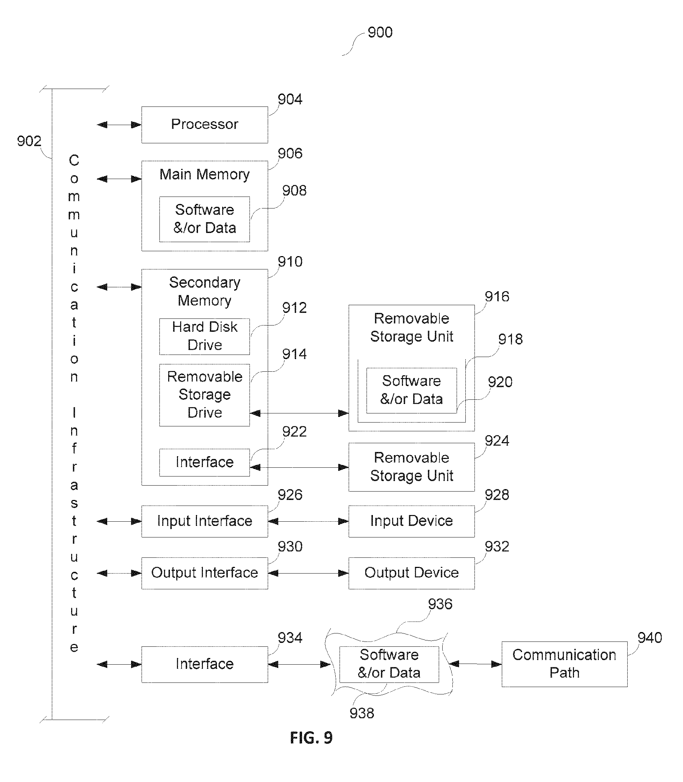

Aspects of the above can be implemented by software, firmware, hardware, or any combination thereof. FIG. 9 illustrates an example computer system 900 in which the above, or portions thereof, may be implemented as computer-readable code. Various embodiments of the above are described in terms of this example computer system 900. After reading this description, it will become apparent to a person skilled in the relevant art how to implement the embodiments described herein using other computer systems and/or computer architectures.

Computer system 900 includes one or more processors, such as processor 904. Processor 904 can be a special purpose processor or a general purpose processor. Processor 904 is connected to a communication infrastructure 902 (for example, a bus or a network).

Computer system 900 also includes a main memory 906, preferably Random Access Memory (RAM), containing possibly inter alia computer software and/or data 908.

Computer system 900 may also include a secondary memory 910. Secondary memory 910 may include, for example, a hard disk drive 912, a removable storage drive 914, a memory stick, etc. A removable storage drive 914 may comprise a floppy disk drive, a magnetic tape drive, an optical disk drive, a flash memory, or the like. A removable storage drive 914 reads from and/or writes to a removable storage unit 916 in a well-known manner. A removable storage unit 916 may comprise a floppy disk, magnetic tape, optical disk, etc. which is read by and written to by removable storage drive 914. As will be appreciated by persons skilled in the relevant art(s) removable storage unit 916 includes a computer usable storage medium 918 having stored therein possibly inter alia computer software and/or data 920.

In alternative implementations, secondary memory 910 may include other similar means for allowing computer programs or other instructions to be loaded into computer system 1400. Such means may include, for example, a removable storage unit 924 and an interface 922. Examples of such means may include a program cartridge and cartridge interface (such as that found in video game devices), a removable memory chip (such as an Erasable Programmable Read-Only Memory (EPROM), or Programmable Read-Only Memory (PROM)) and associated socket, and other removable storage units 924 and interfaces 922 which allow software and data to be transferred from the removable storage unit 924 to computer system 900.

Computer system 900 may also include an input interface 926 and a range of input devices 928 such as, possibly inter alia, a keyboard, a mouse, etc.

Computer system 900 may also include an output interface 930 and a range of output devices 932 such as, possibly inter alia, a display, one or more speakers, etc.

Computer system 900 may also include a communications interface 934. Communications interface 934 allows software and/or data 938 to be transferred between computer system 900 and external devices. Communications interface 934 may include a modem, a network interface (such as an Ethernet card), a communications port, a Personal Computer Memory Card International Association (PCMCIA) slot and card, or the like. Software and/or data 938 transferred via communications interface 934 are in the form of signals 936 which may be electronic, electromagnetic, optical, or other signals capable of being received by communications interface 934. These signals 936 are provided to communications interface 934 via a communications path 940. Communications path 940 carries signals and may be implemented using wire or cable, fiber optics, a phone line, a cellular phone link, a Radio Frequency (RF) link or other communications channels.

As used in this document, the terms "computer program medium," "computer usable medium," and "computer readable medium" generally refer to media such as removable storage unit 916, removable storage unit 924, and a hard disk installed in hard disk drive 912. Signals carried over communications path 940 can also embody the logic described herein. Computer program medium and computer usable medium can also refer to memories, such as main memory 906 and secondary memory 910, which can be memory semiconductors (e.g. Dynamic Random Access Memory (DRAM) elements, etc.). These computer program products are means for providing software to computer system 900.

Computer programs (also called computer control logic) are stored in main memory 906 and/or secondary memory 910. Computer programs may also be received via communications interface 934. Such computer programs, when executed, enable computer system 900 to implement the present invention as discussed herein. In particular, the computer programs, when executed, enable processor 904 to implement the processes of aspects of the above. Accordingly, such computer programs represent controllers of the computer system 900. Where the invention is implemented using software, the software may be stored in a computer program product and loaded into computer system 900 using removable storage drive 914, interface 922, hard drive 912 or communications interface 934.

The invention is also directed to computer program products comprising software stored on any computer useable medium. Such software, when executed in one or more data processing devices, causes data processing device(s) to operate as described herein. Embodiments of the invention employ any computer useable or readable medium, known now or in the future. Examples of computer useable mediums include, but are not limited to, primary storage devices (e.g., any type of random access memory), secondary storage devices (e.g., hard drives, floppy disks, Compact Disc Read-Only Memory (CD-ROM) disks, Zip disks, tapes, magnetic storage devices, optical storage devices, Microelectromechanical Systems (MEMS), nanotechnological storage device, etc.), and communication mediums (e.g., wired and wireless communications networks, local area networks, wide area networks, intranets, etc.).

The above description is intended by way of example only. Various modifications and structural changes may be made therein without departing from the scope of the concepts described herein and within the scope and range of equivalents of the claims.

## Claims

1. A method comprising:
receiving data from one or more data producers;
processing the data by, at least, aggregating and analyzing the data to identify a plurality of insights; and
supplying results of the processing to one or more data consumers.

2. The method of claim 1, wherein the data is anonymized by assigning an opaque value to the data.

3. The method of claim 1 or 2, wherein at least one of the data producers is a telecommunications provider.

4. The method of any of the preceding claims, wherein the data is associated with one or more mobile device users.

5. The method of claim 4, wherein the insights include patterns or trends associated with the mobile device users.

6. The method of any of the preceding claims, wherein the results are supplied to the one or more data consumers using a software program comprising a user interface.

7. The method of claim 6, wherein the user interface allows data consumers to view and analyze the insights.

8. The method of any of the preceding claims, wherein the data is received, processed, and supplied in near real-time.

9. A system comprising:
a data producer to collect data from a plurality of data sources;
a service provider to:
receive the data from the data producer;
process the data by, at least, aggregating and analyzing the data to identify a plurality of insights;
generate results of the processing; and
a data consumer to receive the results of the processing from the service provider.

10. The system of claim 9, further configured to perform a method as set out in any of claims 2 to 8.

11. A non-transitory computer readable medium containing program instructions, wherein execution of the program instructions by one or more processors of a computer system causes one or more processors to carry out the steps of:
receiving, at a service provider, data from a plurality of telecommunication providers, wherein the data is generated by a plurality of mobile device users;
storing the data on a cloud based service;
processing, at the service provider, the data by, at least, aggregating and analyzing the data to identify a plurality of insights, wherein the insights comprise demographic trends and data usage patterns for the mobile device users; and
supplying, using a user interface on an access portal, results of the processing to one or more data consumers, wherein the user interface includes searching and filtering capabilities.

12. The non-transitory computer readable medium of claim 11, wherein the demographic trends comprise statistics about different types of mobile devices and a gender of the mobile device users.

13. The non-transitory computer readable medium of claim 11 or 12, wherein the data usage patterns comprise statistics about categories of websites the mobile device users are accessing.

14. The non-transitory computer readable medium of any of claims 11 to 13, further comprising providing a registration process prior to supplying the results of the processing.
